# EUROPEAN PATENT APPLICATION

(11) **EP 4 054 253 A1**
(43) Date of publication of application: **07.09.2022**
(21) Application number: 20897441.0
(22) Date of filing: 17.11.2020
(51) Int. Cl.: H04W 68/00

(54) **COMMUNICATION METHOD AND COMMUNICATION APPARATUS**

(30) Priority: 06.12.2019 CN 201911243866
(71) Applicant: Huawei Technologies Co., Ltd., Shenzhen, Guangdong 518129 (CN)
(72) Inventor: CAI, Yu, Shenzhen, Guangdong 518129 (CN); JIN, Hui, Shenzhen, Guangdong 518129 (CN); YAO, Chuting, Shenzhen, Guangdong 518129 (CN); WANG, Jian, Shenzhen, Guangdong 518129 (CN)
(74) Representative: MERH-IP Matias Erny Reichl Hoffmann Patentanwälte PartG mbB
(86) International application number: PCT/CN2020/129472
(87) International publication number: WO 2021/109868

(57) **Abstract**

This application provides a communications method and a communications apparatus, to perform paging by using a user identity in a terminal to act as a paging agent for another user equipment, so as to avoid a paging loss. In the method, a first communications apparatus determines a first user identity included in the terminal that needs to be paged, where the first communications apparatus is an apparatus providing a service for the first user identity; the first communications apparatus sends first information to a second communications apparatus, where the first information is used to indicate that the second communications apparatus pages the first user identity by using a second user identity included in the terminal; and the second communications apparatus is an apparatus providing a service to the second user identity.

## Description

### CROSS-REFERENCE TO RELATED APPLICATION

This application claims priority to Chinese Patent Application No. 201911243866.4, filed with the China National Intellectual Property Administration on December 6, 2019, and entitled "COMMUNICATIONS METHOD AND COMMUNICATIONS APPARATUS", which is incorporated herein by reference in its entirety.

### TECHNICAL FIELD

This application relates to the field of communications technologies, and in particular, to a communications method and a communications apparatus.

### BACKGROUND

As communications technologies develop, many mobile terminals (such as mobile phones) support a multi-card function. In other words, a plurality of subscriber identity module (subscriber identity module, SIM) cards are all installed in one mobile phone, and the plurality of SIM cards may be simultaneously in a standby state on a network.

Currently, some mobile phones only support receiving, at one moment, a signal from a network accessed by only one SIM card. A dual-card mobile phone is used as an example. When one SIM card performs data transmission, the other SIM card cannot implement data transmission with a network-side device. For example, one SIM card receives a downlink signal. At this time, if a network side pages the other SIM card (for example, the SIM card is in an idle mode), the other SIM card detects no paging through listening. Consequently, a paging loss is caused.

Therefore, how to improve a paging mechanism of a multi-card terminal is a problem needing to be resolved.

### SUMMARY

This application provides a communications method and a communications apparatus, to avoid a paging loss of a multi-card terminal.

According to a first aspect, a communications method is provided. A first communications apparatus determines that a first user identity included in a terminal needs to be paged, where the first communications apparatus is an apparatus providing a service to the first user identity. The first communications apparatus sends first information to a second communications apparatus, where the first information is used to indicate the second communications apparatus to page the first user identity by using a second user identity included in the terminal. The second communications apparatus is an apparatus providing a service to the second user identity.

A SIM card 1 and a SIM card 2 are used as an example. The SIM card 1 is connected to the first communications apparatus, and the SIM card 2 is connected to the second communications apparatus. When determining to page the SIM card 1, the first communications apparatus may send the first information to the second communications apparatus, to indicate the second communications apparatus to page the SIM card 1 by using the SIM card 2. When the SIM card 2 occupies a radio frequency Rx channel to receive downlink data, if a network side needs to page the SIM card 1, the SIM card 1 may be paged by using the SIM card 2, thereby avoiding a paging loss of the SIM card 1.

In a first solution, the first user identity is in an inactive mode or an idle mode, and a state of the second user identity is not limited. In other words, when the first user identity is in an inactive mode or an idle mode, the second user identity needs to act as a paging agent for the first user identity, to avoid a paging loss of the first user identity.

In a second solution, the second user identity is in a connected mode, and a state of the first user identity is not limited. In other words, one user identity in a connected mode may act as a paging agent for the other user identity.

In a third solution, the first user identity is in an inactive mode or an idle mode, and the second user identity is in an inactive mode. In other words, a user identity in an inactive mode may act as a paging agent for a user identity in an inactive mode or an idle mode.

In a possible design, the first communications apparatus receives second information sent by the second communications apparatus, and the second message is used to indicate that the second communications apparatus pages the first user identity by using the second user identity.

For example, the second information may be acknowledgment information, that is, for acknowledging that the second communications apparatus pages the first user identity by using the second user identity.

In a possible design, after the first communications apparatus sends the first information to the second communications apparatus, if the second user identity is in an idle mode or an inactive mode, the first communications apparatus receives third information sent by the second communications apparatus, where the third information is used to indicate that the second communications apparatus refuses to page the first user identity by using the second user identity.

For example, a SIM card 1 and a SIM card 2 are used as an example. The SIM card 1 is connected to the first communications apparatus, and the SIM card 2 is connected to the second communications apparatus. When determining to page the SIM card 1, the first communications apparatus may send the first information to the second communications apparatus, to indicate the second communications apparatus to page the SIM card 1 by using the SIM card 2. If the SIM card 2 is in an idle mode or an inactive mode, the second communications apparatus may refuse to page the SIM card 1 by using the SIM card 2.

A terminal negotiates with a first communications system about whether the first user identity acts as a paging agent for the second user identity or whether the second user identity acts as a paging agent for the first user identity.

In a manner 1, the first communications apparatus receives fourth information sent by the terminal by using the first user identity, where the fourth information is used to indicate related information of the second user identity; and the first communications apparatus sends fifth information to the terminal, where the fifth information is used to indicate that the second user identity acts as a paging agent for the first user identity. Then the first communications apparatus receives sixth information sent by the terminal, where the sixth information is used to indicate an acknowledgment that the second user identity acts as a paging agent for the first user identity.

In the manner 1, the terminal sends the related information of the second user identity to the first communications apparatus, and the first communications apparatus determines that the second user identity acts as a paging agent for the first user identity. Then the first communications apparatus notifies the terminal that the second user identity acts as a paging agent for the first user identity.

For example, the related information of the second user identity includes an international mobile equipment identity IMEI, a mobile equipment identity MEID, an international mobile subscriber identity IMSI, a temporary mobile subscriber identity TMSI, a packet temporary mobile subscriber identity P-TMSI, an integrated circuit card identifier ICCID, a mobile subscriber international ISDN number MSISDN, a mobile station roaming number MSRN, a serial number SN, or a radio network temporary identifier RNTI.

In a manner 2, the terminal determines on its own whether the first user identity acts as a paging agent for the second user identity or whether the second user identity acts as a paging agent for the first user identity. It is assumed that the terminal determines that the second user identity acts as a paging agent for the first user identity. Then the terminal may send, to the first communications apparatus, indication information indicating that the second user identity acts as a paging agent for the first user identity.

In this embodiment of this application, the first communications apparatus is an apparatus in the first communications system, and the second communications apparatus is an apparatus in a second communications system. The first communications system is an LTE system, an EPC system, or a 5G system, and the second communications system is an LTE system, an EPC system, or a 5G system. The foregoing describes examples of the first communications system and the second communications system, and the first communications system and the second communications system are not limited. Another communications system is also applicable.

In this embodiment of this application, the first communications apparatus is a first access and mobility management function AMF, a first session management function SMF, a first radio access network RAN, or a first user plane function UPF; and the second communications apparatus is a second AMF, a second SMF, a second RAN, or a second UPF. The foregoing describes examples of the first communications apparatus and the second communications apparatus, and the first communications apparatus and the second communications apparatus are not limited. Another network element or apparatus is also applicable.

According to a second aspect, a communications method is further provided. A second communications apparatus receives first information sent by a first communications apparatus, where the first information is used to indicate the second communications apparatus to page a first user identity by using a second user identity included in a terminal. The second communications apparatus is an apparatus providing a service to the second user identity, and the first communications apparatus is an apparatus providing a service to the first user identity. The second communications apparatus pages the first user identity by using the second user identity.

A SIM card 1 and a SIM card 2 are used as an example. The SIM card 1 is connected to the first communications apparatus, and the SIM card 2 is connected to the second communications apparatus. When determining to page the SIM card 1, the first communications apparatus may send the first information to the second communications apparatus, to indicate the second communications apparatus to page the SIM card 1 by using the SIM card 2. When the SIM card 2 occupies a radio frequency Rx channel to receive downlink data, if a network side needs to page the SIM card 1, the SIM card 1 may be paged by using the SIM card 2, thereby avoiding a paging loss of the SIM card 1.

In a first solution, the first user identity is in an inactive mode or an idle mode, and a state of the second user identity is not limited. In other words, when the first user identity is in an inactive mode or an idle mode, the second user identity needs to act as a paging agent for the first user identity, to avoid a paging loss of the first user identity.

In a second solution, the second user identity is in a connected mode, and a state of the first user identity is not limited. In other words, one user identity in a connected mode may act as a paging agent for the other user identity.

In a third solution, the first user identity is in an inactive mode or an idle mode, and the second user identity is in an inactive mode. In other words, the user identity in an inactive mode may act as a paging agent for the user identity in an inactive mode or an idle mode.

In a possible design, the second communications apparatus sends second information to the first communications apparatus, where the second message is used to indicate that the second communications apparatus pages the first user identity by using the second user identity.

For example, the second information may be acknowledgment information, that is, for acknowledging that the second communications apparatus pages the first user identity by using the second user identity.

In a possible design, if the second user identity is in an idle mode or an inactive mode, the second communications apparatus sends third information to the first communications apparatus, where the third information is used to indicate that the second communications apparatus refuses to page the first user identity by using the second user identity.

For example, a SIM card 1 and a SIM card 2 are used as an example. The SIM card 1 is connected to the first communications apparatus, and the SIM card 2 is connected to the second communications apparatus. When determining to page the SIM card 1, the first communications apparatus may send the first information to the second communications apparatus, to indicate the second communications apparatus to page the SIM card 1 by using the SIM card 2. If the SIM card 2 is in an idle mode or an inactive mode, the second communications apparatus may refuse to page the SIM card 1 by using the SIM card 2.

In this embodiment of this application, the first communications apparatus is an apparatus in a first communications system, and the second communications apparatus is an apparatus in a second communications system. The first communications system is an LTE system, an EPC system, or a 5G system, and the second communications system is an LTE system, an EPC system, or a 5G system. The foregoing describes examples of the first communications system and the second communications system, and the first communications system and the second communications system are not limited. Another communications system is also applicable.

In this embodiment of this application, the first communications apparatus is a first access and mobility management function AMF, a first session management function SMF, a first radio access network RAN, or a first user plane function UPF; the second communications apparatus is a second AMF, a second SMF, a second RAN, or a second UPF. The foregoing describes examples of the first communications apparatus and the second communications apparatus, and the first communications apparatus and the second communications apparatus are not limited. Another network element or apparatus is also applicable.

According to a third aspect, a communications method is further provided, applied to a communications apparatus including a first user identity and a second user identity. The communications apparatus determines that the second user identity acts as a paging agent for the first user identity; and receives first information by using the second user identity, where the first information is used to page the first user identity.

A SIM card 1 and a SIM card 2 are used as an example. When the SIM card 2 receives downlink data, a first message used to indicate to page the SIM card 1 may be received by using the SIM card 2, thereby avoiding a paging loss of the SIM card 1.

In a first solution, the first user identity is in an inactive mode or an idle mode, and a state of the second user identity is not limited. In other words, when the first user identity is in an inactive mode or an idle mode, the second user identity needs to act as a paging agent for the first user identity, to avoid a paging loss of the first user identity.

In a second solution, the second user identity is in a connected mode, and a state of the first user identity is not limited. In other words, one user identity in a connected mode may act as a paging agent for the other user identity.

In a third solution, the first user identity is in an inactive mode or an idle mode, and the second user identity is in an inactive mode. In other words, the user identity in an inactive mode may act as a paging agent for the user identity in an inactive mode or an idle mode.

A terminal negotiates with a first communications system about whether the first user identity acts as a paging agent for the second user identity or whether the second user identity acts as a paging agent for the first user identity.

In a manner 1, the first communications apparatus receives fourth information sent by the terminal by using the first user identity, where the fourth information is used to indicate related information of the second user identity; and the first communications apparatus sends fifth information to the terminal, where the fifth information is used to indicate that the second user identity acts as a paging agent for the first user identity. Then the first communications apparatus receives sixth information sent by the terminal, where the sixth information is used to indicate an acknowledgment that the second user identity acts as a paging agent for the first user identity.

In the manner 1, the terminal sends the related information of the second user identity to the first communications apparatus, and the first communications apparatus determines that the second user identity acts as a paging agent for the first user identity. Then the first communications apparatus notifies the terminal that the second user identity acts as a paging agent for the first user identity.

For example, the related information of the second user identity includes an international mobile equipment identity IMEI, a mobile equipment identity MEID, an international mobile subscriber identity IMSI, a temporary mobile subscriber identity TMSI, a packet temporary mobile subscriber identity P-TMSI, an integrated circuit card identifier ICCID, a mobile subscriber international ISDN number MSISDN, a mobile station roaming number MSRN, a serial number SN, or a radio network temporary identifier RNTI.

In a manner 2, the terminal determines on its own whether the first user identity acts as a paging agent for the second user identity or whether the second user identity acts as a paging agent for the first user identity. It is assumed that the terminal determines that the second user identity acts as a paging agent for the first user identity. Then the terminal may send, to the first communications apparatus, indication information indicating that the second user identity acts as a paging agent for the first user identity.

According to a fourth aspect, a communications apparatus is further provided, including: a processing unit, configured to determine that a first user identity included in a terminal needs to be paged, where the communications apparatus is an apparatus providing a service to the first user identity; and a communications unit, configured to send first information to a second communications apparatus, where the first information is used to indicate the second communications apparatus to page the first user identity by using a second user identity included in the terminal. The second communications apparatus is an apparatus providing a service to the second user identity.

According to a fifth aspect, a communications apparatus is further provided, including: a communications module, configured to receive first information sent by a first communications apparatus, where the first information is used to indicate the communications apparatus to page a first user identity by using a second user identity included in a terminal, the communications apparatus is an apparatus providing a service to the second user identity, and the first communications apparatus is an apparatus providing a service to the first user identity; and a processing module, configured to use the communications module to page the first user identity by using the second user identity.

According to a sixth aspect, a communications apparatus is further provided, where the communications apparatus includes a first user identity and a second user identity, and further includes: a processing unit, configured to determine that the second user identity acts as a paging agent for the first user identity; and a communications unit, configured to receive first information by using the second user identity, where the first information is used to page the first user identity.

According to a seventh aspect, a communications apparatus is further provided, including:
one or more processors;
one or more memories; and
a communications interface, configured to communicate with another apparatus, where
the one or more memories store a computer program, and when the computer program is executed by the one or more processors, the communications apparatus is enabled to implement the method provided according to the first aspect.

According to an eighth aspect, a communications apparatus is further provided, including:
one or more processors;
one or more memories; and
a communications interface, configured to communicate with another apparatus, where
the one or more memories store a computer program, and when the computer program is executed by the one or more processors, the communications apparatus is enabled to implement the method provided according to the second aspect.

According to a ninth aspect, a communications apparatus is further provided, including:
one or more processors;
one or more memories; and
a communications interface, configured to communicate with another apparatus, where
the one or more memories store a computer program, and when the computer program is executed by the one or more processors, the communications apparatus is enabled to implement the method provided according to the third aspect.

According to a tenth aspect, a computer-readable storage medium is further provided, where the computer-readable storage medium stores a computer program, and when the computer program is run on an electronic device, the electronic device is enabled to implement the method provided according to the first aspect.

According to an eleventh aspect, a computer-readable storage medium is further provided, where the computer-readable storage medium stores a computer program, and when the computer program is run on an electronic device, the electronic device is enabled to implement the method provided according to the second aspect.

According to a twelfth aspect, a computer-readable storage medium is further provided, where the computer-readable storage medium stores a computer program, and when the computer program is run on an electronic device, the electronic device is enabled to implement the method provided according to the third aspect.

According to a thirteenth aspect, a computer program is further provided, including instructions, where when the instructions are run on a computer, the computer is enabled to implement the method provided according to the first aspect.

According to a fourteenth aspect, a computer program is further provided, including instructions, where when the instructions are run on a computer, the computer is enabled to implement the method provided according to the second aspect.

According to a fifteenth aspect, a computer program is further provided, including instructions, where when the instructions are run on a computer, the computer is enabled to implement the method provided according to the second aspect.

According to a sixteenth aspect, a chip is further provided, where the chip is configured to read a computer program stored in a memory, to implement the method provided according to the first aspect.

According to a seventeenth aspect, a chip is further provided, where the chip is configured to read a computer program stored in a memory, to implement the method provided according to the second aspect.

According to an eighteenth aspect, a chip is further provided, where the chip is configured to read a computer program stored in a memory, to implement the method provided according to the second aspect.

### BRIEF DESCRIPTION OF DRAWINGS

FIG. 1 is a schematic diagram of a structure of a first terminal according to an embodiment of this application;
FIG. 2 is a schematic diagram of a structure of a second terminal according to an embodiment of this application;
FIG. 3 is a schematic diagram of a structure of a third terminal according to an embodiment of this application;
FIG. 4 is a schematic diagram of a communications system according to an embodiment of this application;
FIG. 5 is a schematic flowchart of a communications method according to an embodiment of this application;
FIG. 6 is a schematic diagram of a first communications system according to an embodiment of this application;
FIG. 7 is a schematic diagram of a second communications system according to an embodiment of this application;
FIG. 8 is a schematic diagram of a third communications system according to an embodiment of this application;
FIG. 9 is a schematic diagram of a fourth communications system according to an embodiment of this application; and
FIG. 10 to FIG. 19 are schematic diagrams of communications apparatuses according to embodiments of this application.

### DESCRIPTION OF EMBODIMENTS

To make objectives, technical solutions, and advantages of embodiments of this application clearer, the following further describes embodiments of this application in detail with reference to the accompanying drawings.

The following describes some terms in embodiments of this application to facilitate understanding of a person skilled in the art.

(1) Network device: The network device includes, for example, an access network (access network, AN) device such as a base station (for example, an access point), and may be a device that communicates with a wireless terminal device through an air interface by using one or more cells in an access network. Alternatively, the network device is, for example, a road side unit (road side unit, RSU) in a vehicle-to-everything (vehicle-to-everything, V2X) technology. The base station may be configured to mutually convert a received over-the-air frame and an IP packet, and serve as a router between the terminal and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolutional Node B) in a long term evolution (long term evolution, LTE) system or a long term evolution-advanced (long term evolution-advanced, LTE-A) system, may include a next generation NodeB (next generation node B, gNB) in an evolved packet core (evolved packet core, EPC) network, a 5th generation (the 5th generation, 5G) mobile communication technology, or a new radio (new radio, NR) system (also referred to as an NR system for short), or may include a centralized unit (centralized unit, CU) and a distributed unit (distributed unit, DU) in a cloud access network (cloud radio access network, Cloud RAN) system. This is not limited in the embodiments of this application.

The network device may further include a core network device, and the core network device includes, for example, an access and mobility management function (access and mobility management function, AMF).

In the embodiments of this application, an apparatus configured to implement a network device function may be a network device, or may be an apparatus, for example, a chip system, that can support the network device in implementing the function. The apparatus may be installed in the network device. In the technical solutions provided in the embodiments of this application, an example in which an apparatus for implementing a network side device function is a network side device is used to describe the technical solutions provided in the embodiments of this application.

(2) A terminal includes a device that provides a voice and/or data connectivity for a user. Specifically, the terminal includes a device that provides a voice for the user, includes a device that provides data connectivity for the user, or includes a device that provides a voice and data connectivity for the user. For example, the terminal may include a handheld device having a wireless connection function or a processing device connected to a wireless modem. The terminal may communicate with a core network through a radio access network (radio access network, RAN), and exchange a voice or data with the RAN, or exchange a voice and data with the RAN. The terminal may include user equipment (user equipment, UE), a wireless terminal, a mobile terminal, a device-to-device communication (device-to-device, D2D) terminal, a vehicle-to-everything (vehicle to everything, V2X) terminal, a machine-to-machine/machine-type communications (machine-to-machine/machine-type communications, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal may include a mobile phone (or referred to as a "cellular" phone), a computer with a mobile terminal, or a portable, pocket-sized, handheld, or computer built-in mobile apparatus. For example, the terminal may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal alternatively includes a limited device, for example, a device having low power consumption, a device having a limited storage capability, or a device having a limited computing capability. For example, the terminal includes an information sensing device such as a barcode, radio frequency identification (radio frequency identification, RFID), a sensor, a global positioning system (global positioning system, GPS), or a laser scanner.

By way of example and not limitation, in this embodiment of this application, the terminal may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, bands, clothes, and shoes. The wearable device is a portable device that can be directly worn by a user or integrated into clothes or an accessory of the user. The wearable device is not only a hardware device, but also implements a powerful function through software support, data exchange, and cloud interaction. Broadly, wearable intelligent devices include full-featured and large-sized devices that can implement all or some functions without depending on smartphones, for example, smart watches or smart glasses, and include devices that focus only on one type of application functions and need to collaboratively work with other devices such as smartphones, for example, various smart bands, smart helmets, or smart jewelry for monitoring physical signs.

If the various terminals described above are located on a vehicle (for example, placed in the vehicle or installed in the vehicle), the terminals may be considered as vehicle-mounted terminals. For example, the vehicle-mounted terminal is also referred to as an on board unit (on-board unit, OBU).

In the embodiments of this application, the terminal may further include a relay (relay). Alternatively, it may be understood that any device that can perform data communication with a base station may be considered as a terminal.

In the embodiments of this application, an apparatus configured to implement a terminal function may be a terminal, or may be an apparatus, for example, a chip system, that can support the terminal in implementing the function. The apparatus may be installed in the terminal. In embodiments of this application, the chip system may include a chip, or may include a chip and another discrete component. In the technical solutions provided in the embodiments of this application, an example in which an apparatus for implementing a terminal function is a terminal is used to describe the technical solutions provided in the embodiments of this application.

(3) Radio resource control (radio resource control, RRC). In LTE, two RRC states are supported, namely, an RRC idle mode (RRC_IDLE) and an RRC connected mode (RRC CONNECTED). In NR, an RRC inactive mode (RRCINACTIVE) is introduced. In other words, three states are supported in NR: an RRC idle mode (RRC IDLE), an RRC inactive mode (RRC INACTIVE), and an RRC connected mode (RRC_CONNECTED). Switching may be performed among different RRC states. For example, when UE is in an RRC_IDLE mode, the UE may switch to an RRC_CONNECTED mode by using an establish mechanism, and then fall back to the RRC_IDLE mode by using a release mechanism. When the UE is in an RRC CONNECTED mode, the UE may switch to an RRC_INACTIVE mode by using a release with suspend mechanism, and then fall back to the RRC_CONNECTED mode by using a resume mechanism. When the UE is in an RRC_INACTIVE mode, the UE may switch to an RRC_IDLE mode by using the release mechanism.

A 5th generation (5th generation, 5G) network architecture based on a service-oriented architecture is used as an example. The 5G network architecture may include three parts, namely a terminal device part, a data network (data network, DN) part, and an operator network part. The following briefly describes functions of some network elements.

The carrier network may include one or more of the following network elements: a network exposure function (network exposure function, NEF) network element, a policy control function (policy control function, PCF) network element, a unified data management (unified data management, UDM) network element, a unified data repository (Unified Data Repository, UDR), a network repository function (Network Repository Function, NRF) network element, an application function (application function, AF) network element, an access and mobility management function (access and mobility management function, AMF) network element, a session management function (session management function, SMF) network element, a radio access network (radio access network, RAN), a user plane function (user plane function, UPF) network element, and the like. In the foregoing carrier network, parts other than the radio access network may be referred to as core network parts.

The terminal device (terminal device), which may also be referred to as user equipment (user equipment, UE), is a device that has a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, or a satellite). The terminal device may be a mobile phone (mobile phone), a tablet computer (pad), a computer that has a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the carrier network through an interface (for example, N1) provided by the carrier network, and use services such as a data service and/or a voice service provided by the carrier network. The terminal device may further access the DN through the carrier network, and use a carrier service deployed on the DN and/or a service provided by a third party. The third party may be a service provider other than the carrier network and the terminal device, and may provide services such as a data service and/or a voice service for the terminal device. A specific representation form of the third party may be specifically determined based on an actual application scenario, and is not limited herein.

The RAN is a sub-network of the carrier network, and is an implementation system between a service node in the carrier network and the terminal device. To access the carrier network, the terminal device first passes through the RAN, and may be connected to the service node of the carrier network through the RAN. A RAN device in this application is a device that provides a wireless communication function for a terminal device, and the RAN device is also referred to as an access network device. The RAN device in this application includes but is not limited to: a next generation NodeB (gnodeB, gNB) in 5G, an evolved NodeB (evolved nodeB, eNB), a radio network controller (radio network controller, RNC), a NodeB (nodeB, NB), a base station controller (base station controller, BSC), a base transceiver station (base transceiver station, BTS), a home base station (for example, a home evolved nodeB or a home node B, HNB), a baseband unit (baseband unit, BBU), a transmission reception point (transmitting and receiving point, TRP), a transmission point (transmitting point, TP), a mobile switching center, and the like.

The AMF network element mainly performs functions such as mobility management, and access authentication/authorization. In addition, the AMF network element is further responsible for transferring user policies between the UE and the PCF.

The SMF network element mainly performs functions such as session management, execution of a control policy delivered by the PCF, UPF selection, and UE IP address allocation.

The UPF network element serves as an interface UPF of the data network, and implements functions such as user plane data forwarding, session/flow-based charging statistics, and bandwidth limitation.

The UDM network element is mainly responsible for functions such as subscription data management and user access authorization.

The UDR network element is mainly responsible for a function of accessing types of data such as subscription data, policy data, and application data.

The NEF network element is mainly configured to support capability and event exposure.

The AF network element mainly transfers a requirement of an application side on a network side, for example, a quality of service (Quality of Service, QoS) requirement or user status event subscription. The AF may be a third-party functional entity, or may be an application service deployed by an operator, for example, an IP multimedia subsystem (IP Multimedia Subsystem, IMS) voice call service.

The PCF network element is mainly responsible for policy control functions such as session-level or service flow-level charging, QoS bandwidth guarantee and mobility management, and UE policy decision. In this architecture, PCFs connected to the AMF and the SMF are separately an AM PCF (PCF for Access and Mobility Control) and an SM PCF (PCF for Session Management). In an actual deployment scenario, the PCFs may not be a same PCF entity.

The NRF network element may be configured to provide a network element discovery function and provide network element information corresponding to a network element type based on a request from another network element. The NRF further provides a network element management service, for example, registration, update, and deregistration of a network element and subscription and push of a network element status.

The DN is a network outside the carrier network. The carrier network may access a plurality of DNs. A plurality of services may be deployed on the DN, and the DN may provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like on the internal office network of the company.

It should be noted that a communications method provided in the embodiments of this application may be applied to the foregoing 5G network architecture, a 4G network architecture, or future communications, for example, a 6th generation (6th generation, 6G) network architecture. When the communications method provided in the embodiments of this application is applicable to the 4G network architecture, a network element in the 4G network architecture includes, but is not limited to, a mobility management entity (Mobility Management Entity, MME) for an access and mobility management function.

A mobility management network element, a session management network element, and a user plane network element in the embodiments of this application may be an AMF, an SMF, and a UPF in the foregoing 5G network architecture, or may be network elements having functions of the foregoing AMF, SMF, and UPF in future communications, for example, the 6th generation (6th generation, 6G) network. This is not limited in this application. For convenience of description, an example in which the mobility management network element, the session management network element, and the user plane network element are respectively the AMF, the SMF, and the UPF is used for description in this application.

It should be noted that, in the embodiments of this application, a "user identity" (such as a first user identity or a second user identity) is a logical concept. For example, the "user identity" may correspond to a SIM card, subscriber information, a virtual SIM card, or a user identity (such as an international mobile subscriber identity (international mobile subscriber identity, IMSI) or a temporary mobile subscriber identity (temporary mobile subscriber identity, TMSI)). From a perspective of a network side, different "user identities" logically correspond to different communication entities served by the network side. For example, for UE in a 4G system and a 5G system, a terminal supporting two user identities may be considered as two communication entities for the network side. For another example, when the "user identity" corresponds to a SIM card or subscriber information, the network side identifies two terminals supporting different SIM cards or different subscriber information as two different communication entities, and identifies one terminal device supporting a plurality of different SIM cards or a plurality of pieces of subscriber information as a plurality of different communication entities, even though physically the terminal supporting the plurality of different SIM cards or the plurality of pieces of subscriber information is just one physical entity. Embodiments of this application are mainly described by using an example in which a "subscriber identity" corresponds to a SIM card.

For example, the SIM card may be understood as a key for a terminal to access a mobile network. For ease of description, the SIM card and evolution thereof are collectively referred to as a SIM card in the embodiments of this application. For example, the SIM card may be an identity card of a global system for mobile communication (global system for mobile communication, GSM) digital mobile phone user, and is configured to store an identity code and a key of the user, and support authentication performed by a GSM system on the user. For another example, the SIM card may also be a universal subscriber identity module (universal subscriber identity module, USIM), and may also be referred to as an upgraded SIM card.

It should be noted that the communications method provided in the embodiments of this application is applicable to a terminal supporting at least two user identities. A terminal supporting two user identities (referred to as a dual-card terminal) is used as an example below for description.

An example in which a SIM card 1 and a SIM card 2 are installed in the terminal is used. In an existing mechanism, when a network side pages the two cards in the dual-card terminal, the two cards are paged separately, and paging processes are independent of each other. For some dual-card terminals, when the SIM card 1 receives downlink data, if the network side pages the other SIM card at this time, the other SIM card detects no paging through listening. Consequently, a paging loss is caused.

Based on the foregoing technical problem, an embodiment of this application provides a communications method. In the method, one SIM card in a dual-card terminal may act as a paging agent for the other SIM card. For example, a SIM card 1 acts as a paging agent for a SIM card 2, or a SIM card 2 acts as a paging agent for a SIM card 1. It is assumed that the SIM card 1 acts as a paging agent for the SIM card 2. If a network side determines to page the SIM card 2, the SIM card 2 may be paged by using the SIM card 1, to avoid a paging loss of the SIM card 2.

A structure of the terminal provided in this embodiment of this application is described in the following embodiment.

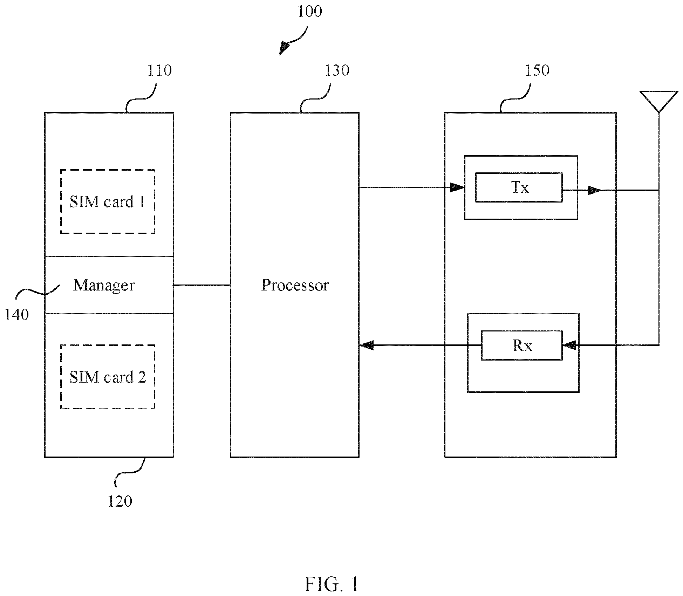

FIG. 1 is a schematic diagram of a structure of a terminal according to an embodiment of this application. As shown in FIG. 1, the terminal 100 may include a first SIM card interface 110, a second SIM card interface 120, a managing device 140 coupled to the first SIM card interface 110 and the second SIM card interface 120, a processor 130 coupled to the managing device 140, and a transceiver 150 connected to the processor 130. The processor 130 may be a baseband processor (baseband processor, BBP). As shown in FIG. 1, the transceiver 150 includes a radio frequency Rx channel and a radio frequency Tx channel. The first SIM card interface 110 is configured to: install a SIM card 1, and communicate with the SIM card 1. The second SIM card interface 120 is configured to: install a SIM card 2, and communicate with the SIM card 2. The managing device 140 may send, to the processor 130, an uplink data packet related to a service of the SIM card 1, and send an uplink data packet related to a service of the SIM card 2. The processor 130 may send each uplink data packet of the SIM card 1 and each uplink data packet of the SIM card 2 to a network-side device on the radio frequency Tx channel. The processor 130 may receive, on the radio frequency Rx channel, each downlink data packet of the SIM card 1 and each downlink data packet of the SIM card 2 that are sent by the network-side device.

For example, each of the two SIM cards in the dual-card terminal provided in this embodiment of this application may support a global system for mobile communications (global system for mobile communications, GSM), a universal mobile telecommunications system (universal mobile telecommunications system, UMTS), a time division-synchronous code division multiple access (time division-synchronous code division multiple access, TD-SCDMA) system, a long term evolution (long term evolution, LTE) system, a code division multiple access (code division multiple access, CDMA) system, a new system (new system, NR) system, a 5G non-standalone (non-standalone, NSA) system, a 5G standalone (standalone, SA) system, and the like.

It should be understood that the SIM card 1 in the terminal 100 may be a primary card of the terminal 100, and the SIM card 2 may be a secondary card of the terminal 100, or the SIM card 2 in the terminal 100 may be a primary card of the terminal 100, and the SIM card 1 may be a secondary card of the terminal 100. This is not limited in this embodiment of this application.

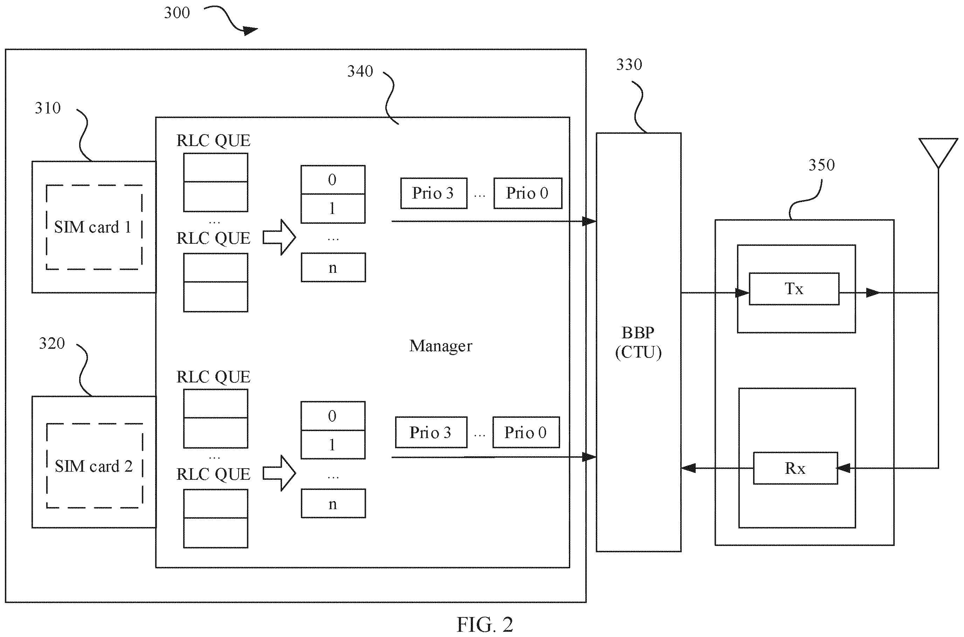

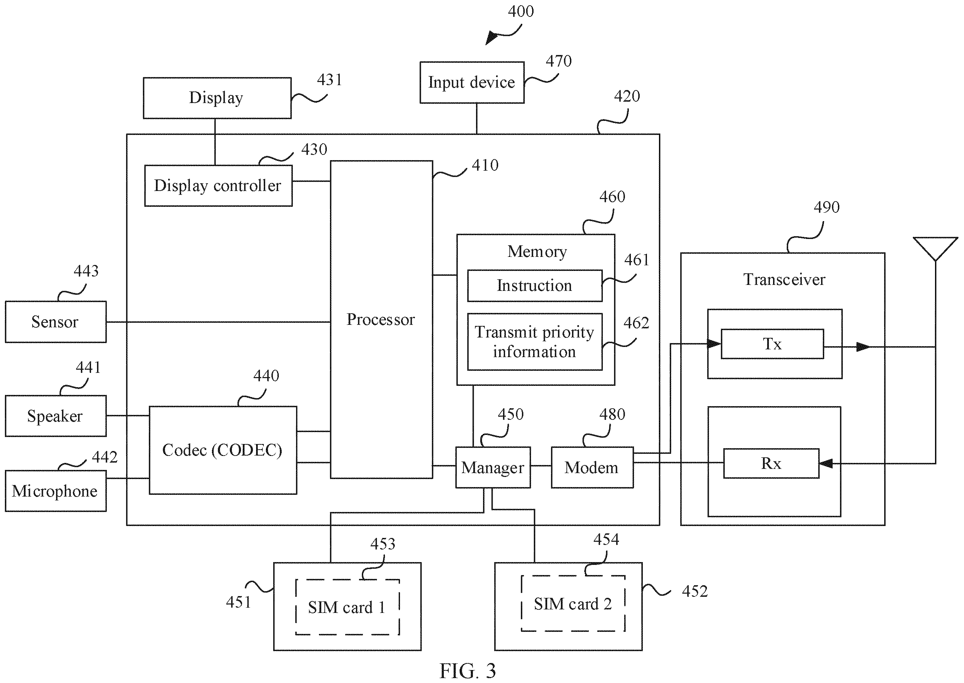

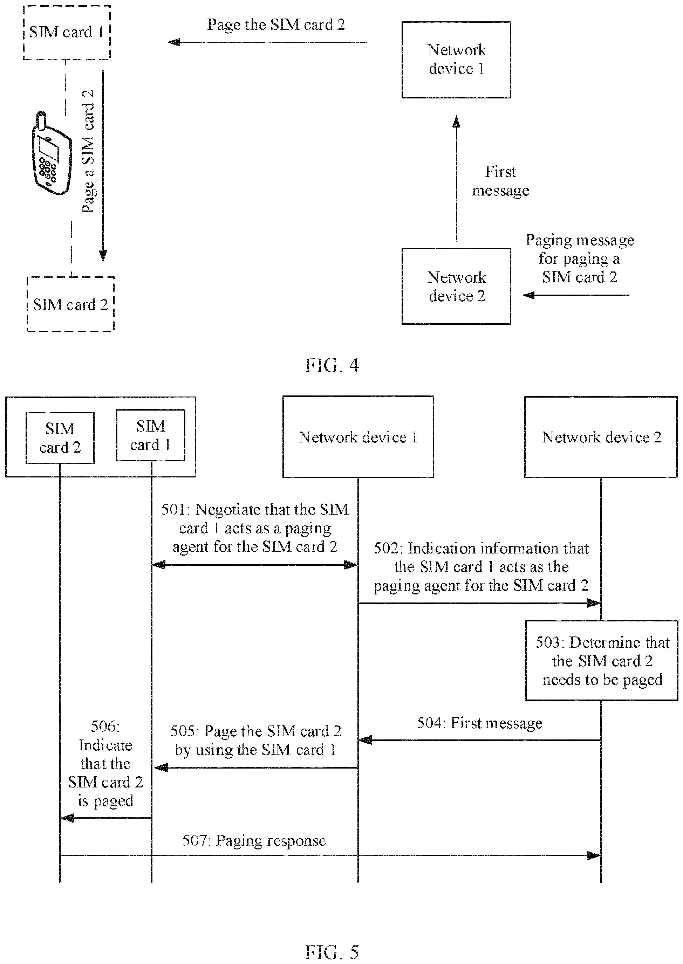

FIG. 2 is a schematic diagram of a structure of another terminal according to an embodiment of this application. As shown in FIG. 2, the terminal 300 may include a first SIM card interface 310, a second SIM card interface 320, a managing device 340 coupled to the first SIM card interface 310 and the second SIM card interface 320, a BBP 330 (namely, a processor) coupled to the managing device 340, and a transceiver 350 connected to the BBP 330. As shown in FIG. 5, the transceiver 350 includes a radio frequency Rx channel and a radio frequency Tx channel. The first SIM card interface 310 is configured to install a SIM card 1 and communicate with the SIM card 1. The second SIM card interface 320 is configured to install a SIM card 2 and communicate with the SIM card 2. The BBP 330 includes a common time unit (common time unit, CTU). The CTU includes an arbiter configured to determine a transmit priority of an uplink data packet. For example, in an LTE network, the terminal 300 may send an uplink data packet to the network side device according to a hybrid automatic repeat request (hybrid automatic repeat request, HARQ) protocol. In this way, even if an uplink data packet of a SIM card (for example, the SIM card 2) sent by the managing device 340 to the BBP 330 is not transmitted in real time, the uplink data packet can be retransmitted according to the HARQ protocol. As shown in FIG. 3, the managing device 340 may send an uplink data packet (prio) in a radio link layer control protocol (radio link control, RLC) queue of the SIM card 1 and the SIM card 2 to the BBP 330 according to the HARQ protocol. The BBP 330 may receive various data packets sent by the managing device 340, for example, an uplink voice packet sent by the SIM card 1 and an uplink signaling packet sent by the SIM card 2.

FIG. 3 is a schematic composition diagram of a structure of still another terminal according to an embodiment of this application. In FIG. 3, an example in which the terminal is a mobile phone is used. It should be understood that an illustrated mobile phone 400 is only an example of the terminal, and the mobile phone 400 may have more or fewer components than those shown in the figure, two or more components may be combined, or the like. Various parts shown in FIG. 3 may be implemented in hardware including one or more signal processing and/or application-specific integrated circuits, software, or a combination of hardware and software. As shown in FIG. 3, the mobile 400 includes: a processor 410, a System-On-a-Chip device 420, a display controller 430, a codec (CODEC) 440, a managing device 450, a memory 460, an input device 470, a modem 480, a transceiver 490, a power supply 491, and the like. A person skilled in the art may understand that the structure of the mobile phone shown in FIG. 3 does not constitute any limitation on the mobile phone. The mobile phone may include components more or fewer than those shown in the figure, or combine some components, or have a different component arrangement.

As shown in FIG. 3, the mobile phone 400 may further include a first SIM card interface 451 and a second SIM card interface 452. The first SIM card interface 451 is configured to communicate with a SIM card 1, and the second SIM card interface 452 is configured to communicate with a SIM card 2. For example, the first SIM card interface 451 and the second SIM card interface 452 may be SIM card connectors, including a main body having a SIM card housing space, and a plurality of communication slots configured to receive conductive terminals of a received SIM card. Electrical signaling may be exchanged with the SIM card through the conductive terminal and the slot. Examples of the interfaces may include serial or parallel (for example, 6-pin or 8-pin) connections. In addition, a plurality of SIM card sizes (for example, a full-sized SIM, a mini SIM, or a micro-SIM) may be provided. In another embodiment, when a plurality of subscriptions are associated with a universal identity module (for example, a universal SIM), the mobile phone 400 may not include a plurality of SIM card interfaces. The managing device 450 is configured to manage the SIM card 1 and the SIM card 2. As shown in FIG. 3, the mobile phone 400 may further include a speaker 441 and a microphone 442 that are coupled to the codec CODEC 440. FIG. 3 also indicates that the CODEC 440 may be coupled to the processor 410 and to the modem 480 that communicates with the transceiver 490. The transceiver 490 is connected to one or more antennas. FIG. 3 shows an instance of only one antenna. In a specific embodiment, the transceiver 490 is connected to a plurality of antennas, the modem 480 supports diversity, and one of the plurality of antennas is a primary antenna and another antenna is a secondary antenna. The transceiver 490 may be an RF circuit. The RF circuit may be configured to send and receive information. For example, after receiving downlink information of a base station, the RF circuit can send the received downlink information to the processor 410 for processing. The RF circuit can also send uplink data to the base station. Usually, the RF circuit includes but is not limited to devices such as an antenna, at least one amplifier, a transceiver, a coupler, a low noise amplifier, and a duplexer. In addition, the RF circuit may communicate with a network and another mobile device through wireless communication. The wireless communication may use any communication standard or protocol, including but not limited to a global system for mobile communications, a general packet radio service, code division multiple access, wideband code division multiple access, long term evolution, an e-mail message, a short message service, and the like. In this embodiment of this application, the transceiver 490 shown in FIG. 3 may include a radio frequency Rx channel and a radio frequency Tx channel (a radio frequency Rx channel and a radio frequency Tx channel that are shown in FIG. 3). The memory 460 can be configured to store a software program and data. The processor 410 performs various functions and data processing of the mobile phone 400 by running the software program and the data that are stored in the memory 460. For example, as shown in FIG. 3, the memory 460 stores an instruction 461 and transmit priority information 462. The instruction 461 may be executed by the processor 410. The memory 460 may include a program storage area and a data storage area. The program storage area may store an operating system, an application program required by at least one function (such as a sound playing function or an image playing function), and the like. The data storage area may store data (such as audio data and a phone book) created based on use of the mobile phone 400. In addition, the memory 460 may include a high-speed random access memory, and may further include a nonvolatile memory, for example, at least one magnetic disk storage device, a flash memory, or another volatile solid-state storage device. In the following embodiment, the memory 460 stores an operating system that supports running of the mobile phone 400, for example, an iOS^{®} operating system developed by Apple, an Android^{®} open-source operating system developed by Google LLC, or a Windows^{®} operating system developed by Microsoft Corporation. The input device 470 (for example, a touchscreen) may be configured to receive entered numerical or character information, and generate signal inputs related to user settings and function control of the mobile phone 400. Specifically, the input device 470 may include a touch panel disposed on the front side of the mobile phone 400. The touch panel may collect a touch operation of a user on or near the touch panel (such as an operation performed by the user on or near the touch panel by using any proper object or accessory such as a finger or a stylus), and drive a corresponding connection apparatus based on a preset program. Optionally, the touch panel may include two parts: a touch detection apparatus and a touch controller. The touch detection apparatus detects a touch location of the user, detects a signal brought by a touch operation, and sends the signal to the touch controller. The touch controller receives touch information from the touch detection apparatus, converts the touch information into touch point coordinates, sends the touch point coordinates to the processor 410, and can receive and execute an instruction sent by the processor 410. In addition, the touch panel may be implemented in a plurality of types, such as a resistive type, a capacitive type, infrared, and a surface acoustic wave. A display 431 (namely, a display) may be configured to display information entered by the user or information provided for the user, and graphical user interfaces (graphical user interface, GUI) of various menus of the mobile phone 400. The display 431 may include a display panel disposed on the front of the mobile phone 400. The display panel may be in a form of a liquid crystal display, an organic light-emitting diode, and the like. After detecting a touch operation performed on or near the touch panel, the touch panel transfers the touch operation to the processor 410 to determine a touch event, and then the processor 410 provides corresponding visual output on the display panel based on a type of the touch event. In FIG. 3, the touch panel and the display panel are used as two independent components to implement input and output functions of the mobile phone 400. However, in some embodiments, the touch panel and the display panel may be integrated to implement the input and output functions of the mobile phone 400. The touch panel and display panel that are integrated may be briefly referred to as a touch display. In some other embodiments, a pressure sensor may be further disposed on the touch panel, so that when the user performs a touch operation on the touch panel, the touch panel can further detect pressure of the touch operation, and the mobile phone 400 can detect the touch operation more accurately. The mobile phone 400 may further include at least one type of sensor 443, such as a light sensor, a motion sensor, and another sensor. Specifically, the light sensor may include an ambient light sensor and a proximity sensor. The ambient light sensor may adjust luminance of the display panel based on intensity of ambient light. The proximity sensor is disposed on the front of the mobile phone 400. When the mobile phone 400 approaches an ear, the mobile phone 400 turns off a power supply of the display panel based on detection of the proximity sensor, so that the mobile phone 400 can further reduce battery power consumption. As one type of motion sensor, an accelerometer sensor may detect values of accelerations in all directions (generally on three axes), may detect a value and a direction of gravity when the mobile phone 400 is stationary, and may be applied to recognizing a mobile phone posture (for example, screen orientation switching, a related game, or magnetometer posture calibration), a function related to vibration recognition (such as a pedometer or a knock), and the like. Other sensors such as a gyroscope, a barometer, a hygrometer, a thermometer, and an infrared sensor that may be further included in the mobile phone 400 are not described herein. The CODEC 440, the speaker 441, and the microphone 442 may provide an audio interface between the user and the mobile phone 400. The CODEC 440 may convert received audio data into an electrical signal and then transmit the electrical signal to the speaker 441, and the speaker 441 converts the electrical signal into an audio signal for outputting. In addition, the microphone 442 converts a collected audio signal into an electrical signal. The CODEC 440 receives the electrical signal and converts the electrical signal into audio data, and then outputs the audio data to the RF circuit, to send the audio data to another mobile phone, or outputs the audio data to the memory 460 for further processing. The processor 410 is a control center of the mobile phone 400, connects various parts of the entire mobile terminal through various interfaces and lines, and performs various functions and data processing of the mobile phone 400 by running or executing the software program stored in the memory 460 and invoking the data stored in the memory 460, to perform overall monitoring on the mobile phone. In some embodiments, the processor 410 may include one or more processing units. The processor 410 may be further integrated with an application processor and a modem processor. The application processor mainly processes an operating system, a user interface, an application, and the like. The modem processor mainly processes wireless communication. It can be understood that, alternatively, the modem processor may not be integrated into the processor 410. The mobile phone 400 may further include a Bluetooth module and a Wi-Fi module. The Bluetooth module is configured to exchange information with another device by using a short-distance communication protocol such as Bluetooth. For example, the mobile phone 400 may set up a Bluetooth connection, by using the Bluetooth module, to another wearable electrical device (for example, a smartwatch) also having a Bluetooth module, to exchange information. Wi-Fi belongs to a short-range wireless communication technology, and the mobile phone 400 can use the Wi-Fi module to help the user receive and send an email, browse a web page, access streaming media, and so on. The Wi-Fi module provides the user with wireless broadband Internet access. The mobile phone 400 further includes the power supply 491 (such as a battery) that supplies power to each component. The power supply may be logically connected to the processor 410 through a power supply management system, to implement, through the power management system, functions such as charging management, discharging management and power consumption management. It can be understood that, in the following embodiments, the power supply 491 may be configured to supply power to the display panel and the touch panel. The methods in the following embodiments all can be implemented in the mobile phone 400 having the foregoing hardware structure.

FIG. 4 is a schematic diagram of a possible communications system according to an embodiment of this application. A terminal of a user that is shown in FIG. 4 may be the terminal shown in FIG. 1, FIG. 2, or FIG. 3. Two or more SIM cards may be installed in the terminal. Two SIM cards (a SIM card 1 and a SIM card 2) are used as an example. A network device 1 provides a service to the SIM card 1, and a network device 2 provides a service to the SIM card 2. It is assumed that the SIM card 1 acts as a paging agent for the SIM card 2. When determining that the SIM card 2 needs to be paged, the network device 2 may send a first message to the network device 1, where the first message is used to indicate the network device 1 to page the SIM card 2 by using the SIM card 1. Therefore, the network device 1 pages the SIM card 2 by using the SIM card 1, thereby implementing that the SIM card 1 acts as a paging agent for the SIM card 2.

It should be noted that, in this embodiment of this application, the two cards in the terminal may be served by one operator. Therefore, the network device corresponding to the SIM card 1 may communicate with the network device corresponding to the SIM card 2.

It should be noted that, in FIG. 4, the network device 1 may be an apparatus in a first communications system, and the network device 2 may be an apparatus in a second communications system. The first communications system is an LTE system, an EPC system, or a 5G system, and the second communications system is an LTE system, an EPC system, or a 5G system. This is not limited in this embodiment of this application.

FIG. 5 is a schematic flowchart of a communications method according to an embodiment of this application. The method is applicable to the communications system shown in FIG. 4. A network device 1 provides a service to a SIM card 1, and a network device 2 provides a service to a SIM card 2. As shown in FIG. 5, a process of the method includes the following steps.

501. A terminal negotiates with a network side about that the SIM card 1 acts as a paging agent for the SIM card 2.

For example, 501 has a plurality of implementations.

In a manner 1, the terminal determines on its own whether the SIM card 1 acts as a paging agent for the SIM card 2, or whether the SIM card 2 acts as a paging agent for the SIM card 1. It is assumed that the terminal determines that the SIM card 1 acts as a paging agent for the SIM card 2, and indicates to the network side, that the SIM card 1 acts as a paging agent for the SIM card 2.

For example, the terminal may determine on its own a paging agent relationship in a plurality of manners. For example, the SIM card 1 is a primary card, the SIM card 2 is a secondary card, and the terminal determines that the SIM card 1 acts as a paging agent for the SIM card 2. Alternatively, a paging agent relationship between the SIM card 1 and the SIM card 2 is pre-configured. Alternatively, a SIM card in a connected mode may act as a paging agent for the other SIM card, and the other SIM card may be in a connected mode, an inactive mode, or an idle mode.

Alternatively, a SIM card in an inactive mode may act as a paging agent for the other SIM card in an inactive mode or an idle mode, or the like.

In the manner 1, after determining that the SIM card 1 acts as a paging agent for the SIM card 2, the terminal may indicate the network side by using the SIM card 1 or the SIM card 2 that the SIM card 1 acts as a paging agent for the SIM card 2. In this manner, 501 in FIG. 5 may be that the SIM card 1 sends, to the network device 1, indication information indicating that the SIM card 1 acts as a paging agent for the SIM card 2. Alternatively, 501 may be that the SIM card 2 sends, to the network device 2, indication information indicating that the SIM card 1 acts as a paging agent for the SIM card 2.

It may be understood that, if the terminal reports the indication information to the network device 1 by using the SIM card 1, related information of the SIM card 2 may be further reported. For example, the related information of the SIM card 2 may be carried in the indication information. Alternatively, if the terminal reports the indication information to the network device 2 by using the SIM card 2, related information of the SIM card 1 may be further reported. For example, the related information of the SIM card 1 may be carried in the indication information.

The related information of the SIM card 1 or the related information of the SIM card 2 may include at least one of the following: an international mobile equipment identity IMEI, a mobile equipment identity MEID, an international mobile subscriber identity IMSI, a temporary mobile subscriber identity TMSI, a packet temporary mobile subscriber identity P-TMSI, an integrated circuit card identifier ICCID, a mobile subscriber international ISDN number MSISDN, a mobile station roaming number MSRN, a serial number SN, or a radio network temporary identifier RNTI.

It may be understood that, after the terminal reports, to the network device 1 by using the SIM card 1, the indication information indicating that the SIM card 1 acts as a paging agent for the SIM card 2, the network device 1 may further send an acknowledgment indication to the SIM card 1, to indicate an acknowledgment that the SIM card 1 acts as a paging agent for the SIM card 2. Likewise, after the terminal reports, to the network device 2 by using the SIM card 2, the indication information indicating that the SIM card 1 acts as a paging agent for the SIM card 2, the network device 2 may further send an acknowledgment indication to the SIM card 2, to indicate an acknowledgment that the SIM card 1 acts as a paging agent for the SIM card 2.

It should be noted that, assuming that the terminal reports, to the network device 1 by using the SIM card 1, the indication information indicating that the SIM card 1 acts as a paging agent for the SIM card 2, the network device 1 may further send the indication information to the network device 2, to notify the network device 2 that the SIM card 1 acts as a paging agent for the SIM card 2. Likewise, assuming that the terminal reports, to the network device 2 by using the SIM card 2, the indication information indicating that the SIM card 1 acts as a paging agent for the SIM card 2, the network device 2 may further send the indication information to the network device 1, to notify the network device 1 that the SIM card 1 acts as a paging agent for the SIM card 2.

In a manner 2, the network side determines whether the SIM card 1 acts as a paging agent for the SIM card 2, or whether the SIM card 1 acts as a paging agent for the SIM card 2. Assuming that the network side determines that the SIM card 1 acts as a paging agent for the SIM card 2, the network side may notify the terminal that the SIM card 1 acts as a paging agent for the SIM card 2.

In an example 1, 501 in FIG. 5 is that the SIM card 1 reports a paging agent acknowledgment request and the related information of the SIM card 2 to the network device 1, where the paging agent acknowledgment request is used to request the network side to indicate the SIM card 1 to act as a paging agent for the SIM card 2, or to indicate the SIM card 2 to act as a paging agent for the SIM card 1. It may be understood that the related information of the SIM card 2 may be carried in the paging agent acknowledgment request. Briefly, the terminal sends the related information of the SIM card 2 to the network device 1 by using the SIM card 1, and requests the network device 1 to determine whether the SIM card 1 acts as a paging agent for the SIM card 2 or whether the SIM card 2 acts as a paging agent for the SIM card 1.

It is assumed that, after determining that the SIM card 1 acts as a paging agent for the SIM card 2, the network device 1 may send, to the terminal, indication information indicating that the SIM card 1 acts as a paging agent for the SIM card 2. After receiving the indication information, the terminal may feed back an acknowledgment indication to the network device 1, to indicate an acknowledgment that the SIM card 1 acts as a paging agent for the SIM card 2.

In some other examples, the terminal may report, to the network device 1 by using the SIM card 1, a query message that the SIM card 1 acts as a paging agent for the SIM card 2, or that the SIM card 2 acts as a paging agent for the SIM card 1. After receiving the query information, if it is assumed that determining that the SIM card 1 acts as a paging agent for the SIM card 2, the network device 1 sends, to the terminal, indication information indicating that the SIM card 1 acts as a paging agent for the SIM card 2.

It may be understood that, after determining that the SIM card 1 acts as a paging agent for the SIM card 2, the network device 1 may send, to the network device 2, the indication information indicating that the SIM card 1 acts as a paging agent for the SIM card 2.

In an example 2, 501 in FIG. 5 is that the SIM card 2 reports a paging agent acknowledgment request and the related information of the SIM card 1 to the network device 2, where the paging agent acknowledgment request is used to request the network side to indicate the SIM card 1 to act as a paging agent for the SIM card 2, or to indicate the SIM card 2 to act as a paging agent for the SIM card 1. It may be understood that the related information of the SIM card 1 may be carried in the paging agent acknowledgment request. Briefly, the terminal sends the related information of the SIM card 1 to the network device 2 by using the SIM card 2, and requests the network device 2 to determine whether the SIM card 1 acts as a paging agent for the SIM card 2 or whether the SIM card 2 acts as a paging agent for the SIM card 1.

It is assumed that, after determining that the SIM card 1 acts as a paging agent for the SIM card 2, the network device 2 may send, to the terminal, indication information indicating that the SIM card 1 acts as a paging agent for the SIM card 2. After receiving the indication information, the terminal may feed back an acknowledgment indication to the network device 2, to indicate an acknowledgment that the SIM card 1 acts as a paging agent for the SIM card 2.

It may be understood that, after determining that the SIM card 1 acts as a paging agent for the SIM card 2, the network device 2 may send, to the network device 1, the indication information indicating that the SIM card 1 acts as a paging agent for the SIM card 2.

It should be noted that the foregoing manner 1 or manner 2 is an example in which the terminal negotiates with the network side about whether the SIM card 1 acts as a paging agent for the SIM card 2, or whether the SIM card 2 acts as a paging agent for the SIM card 1. Another negotiation manner is also feasible. This is not limited in this embodiment of this application.

502. The network device 1 sends, to the network device 2, the indication information indicating that the SIM card 1 acts as a paging agent for the SIM card 2.

In FIG. 5, an example in which the SIM card 1 negotiates with the network device 1 about that the SIM card 1 acts as a paging agent for the SIM card 2 is used. Therefore, after determining that the SIM card 1 acts as a paging agent for the SIM card 2, the network device 1 may notify the network device 2 that the SIM card 1 acts as a paging agent for the SIM card 2. For example, the indication information sent by the network device 1 to the network device 2 for indicating that the SIM card 1 acts as a paging agent for the SIM card 2 may further carry the related information of the SIM card 1 and the related information of the SIM card 2.

503. The network device 2 determines that the SIM card 2 needs to be paged. For example, the network device 2 receives a paging message for paging the SIM card 2. For another example, the network device 2 determines that there is downlink data for the SIM card 2 to be sent. Specifically, the network device 2 receives a message from an SMF, and the message is used to indicate that there is downlink data for the SIM card 2 to be sent.

504. The network device 2 sends a first message to the network device 1, where the first message is used to indicate the network device 1 to page the SIM card 2 by using the SIM card 1. For example, the first message may be indication information indicating to page the SIM card 2 or indicating that the SIM card 2 is paged, or indication information indicating the network device 1 to page the SIM card 2 by using the SIM card 1, or a paging message for paging the SIM card 2.

In a possible implementation, when the network device 2 determines that the SIM card 1 acts as a paging agent for the SIM card 2, and the network device determines that the SIM card 2 needs to be paged, 504 is immediately performed.

In another possible implementation, when the network device 2 determines that the SIM card 2 needs to be paged, the SIM card 2 may be paged first. After paging fails, 504 is then performed.

In still another possible implementation, when the network device 2 determines that the SIM card 1 acts as a paging agent for the SIM card 2, and the network device determines that the SIM card 2 needs to be paged, if it is determined that the SIM card 2 is in an inactive mode or an idle mode, 504 is then performed.

The first message may have a plurality of implementations. For example, the first message includes the indication information indicating the network device 1 to page the SIM card 2 by using the SIM card 1. Alternatively, the first message includes the paging message for paging the SIM card 2, or the like.

It should be noted that, after 504, the network device 2 may further send a second message to the network device 1, where the second message is used to indicate the network device 1 to acknowledge that the SIM card 2 is to be paged by using the SIM card 1. Alternatively, the second message may be used to indicate the network device 1 to acknowledge that the first message is received.

In some embodiments, after the network device 2 sends the first message to the network device 1, if the network device 1 determines that the SIM card 1 cannot act as a paging agent for the SIM card 2, the network device 1 may send a third message to the network device 2. The third message is used to indicate that the network device 1 refuses to page the SIM card 2 by using the SIM card 1. There are many cases in which the SIM card 1 cannot act as a paging agent for the SIM card 2. For example, the SIM card 1 is currently in an idle mode or an inactive mode. It should be understood that the third message may further carry a reason why the network device 1 refuses to page the SIM card 2 by using the SIM card 1, for example, carry indication information indicating that the SIM card 1 is currently in an idle mode.

505. The network device 1 pages the SIM card 2 by using the SIM card 1.

In this embodiment of this application, that the network device 1 pages the SIM card 2 by using the SIM card 1 may be understood as that the network device 1 indicates, by using the SIM card 1, that the SIM card 2 is paged. For example, the network device 1 sends, to the SIM card 1, a paging message for paging the SIM card 2 by a user, or the network device 1 sends, to the SIM card 1, indication information indicating that the SIM card 2 is paged.

For example, there are a plurality of manners in which the network device 1 pages the SIM card 2 by using the SIM card 1, including, but not limited to, the following two manners.

In a manner 1, the network device 1 sends a fourth message to the SIM card 1, where the fourth message is used to page the SIM card 2. That the fourth message is used to page the SIM card 2 may be understood as that the fourth message is used to indicate that the SIM card 2 is paged.

In a manner 2, the network device 1 sends a fifth message to a network device 3, where the fifth message is used to page the SIM card 2. The network device 3 sends the sixth message to the SIM card 1, where the sixth message is used to page the SIM card 2. The network device 3 is, for example, a serving base station of the SIM card 1. That the fifth message is used to page the SIM card 2 may also be understood as that the fifth message is used to indicate that the SIM card 2 is paged. That the sixth message is used to page the SIM card 2 may also be understood as that the sixth message is used to indicate that the SIM card 2 is paged.

It should be noted that, assuming that the terminal negotiates with the network side about that the SIM card 1 acts as a paging agent for the SIM card 2, the terminal may detect paging of the SIM card 2 through listening by using the SIM card 1. For example, when the SIM card 1 occupies a radio frequency Rx channel to receive a downlink signal, the terminal may detect paging of the SIM card 2 through listening by using the SIM card 1. In this way, no paging loss of the SIM card 2 is caused. For example, paging occasions (paging occasion, PO) of the two SIM cards of the terminal overlap in time. When the two SIM cards are both in an idle mode, the terminal may detect, in the PO of one SIM card, paging of the other SIM card through listening. In this way, no paging loss of the other SIM card is caused.

506. The SIM card 1 indicates the SIM card 2 that the SIM card 2 is paged.

For example, the SIM card 1 may send, to the SIM card 2, the indication information indicating that the SIM card 2 is paged.

507. The SIM card 2 sends a paging response to the network device 2.

For example, the paging response may be a service request message, or a response message indicating that the SIM card 2 receives paging. This is not limited in this embodiment of this application.

It should be noted that the network device 1 in the embodiment shown in FIG. 4 or FIG. 5 may be an apparatus in a first communications system, and the network device 2 may be an apparatus in a second communications system. The first communications system is an LTE system, an EPC system, or a 5G system, and the second communications system is an LTE system, an EPC system, or a 5G system. For example, assuming that both the network device 1 and the network device 2 are apparatuses in the 5G system, the network device 1 may be a first access and mobility management function AMF, a first session management function SMF, a first radio access network RAN, or a first user plane function UPF; and the network device 2 may be the second communications apparatus, and may be a second AMF, a second SMF, a second RAN, or a second user plane function UPF. It is assumed that both the network device 1 and the network device 2 are apparatuses in a 4G system. For example, the network device 1 may be a first MME, and the network device 2 may be a second MME. Certainly, the network device 1 may be a first AMF, a first SMF, or a first UPF in the 5G system; and the network device 2 may be a second MME in the 4G system. Alternatively, the network device 1 may be a second MME in the 4G system; and the network device 2 may be a second AMF, a second SMF, or a second UPF in the 5G system.

The following embodiment is described by using an example in which both the network device 1 and the network device 2 are apparatuses in the 5G system, and an example in which the terminal negotiates with a core network device about that the SIM card 1 acts as a paging agent for the SIM card 2 is used.

In an embodiment 1, a SIM card 2 is in an idle mode, and a state of a SIM card 1 is not limited.

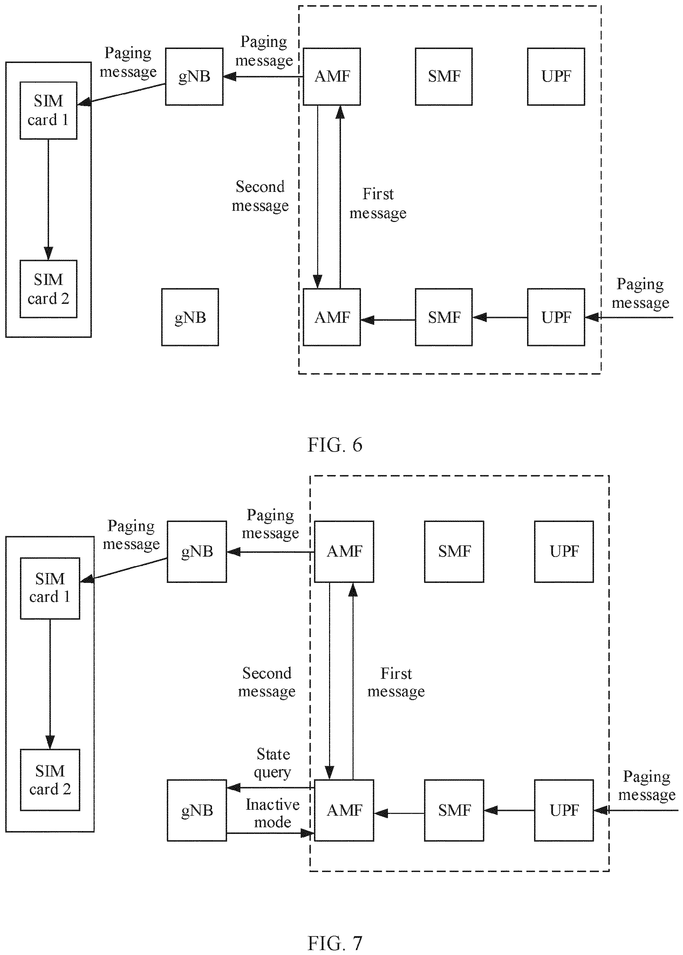

Referring to FIG. 6, after accessing a core network, the SIM card 2 communicates with a core network device (such as an AMF, an SMF, or a UPF) that is related to the SIM card 2 and that is in the core network. After accessing the core network, the SIM card 2 communicates with a core network device (such as an AMF, an SMF, or a UPF) that is related to the SIM card 1 and that is in the core network.

After receiving a paging message for paging the SIM card 2, the UPF corresponding to the SIM card 2 sends the paging message to the SMF. The SMF sends the paging message to the AMF corresponding to the card 2. When determining that the SIM card 2 is in an idle mode, the AMF corresponding to the SIM card 2 sends a first message to the AMF corresponding to the SIM card 1. The first message is used to indicate the AMF corresponding to the SIM card 1 to page the SIM card 2 by using the SIM card 1. After receiving the first message, the AMF of the SIM card 1 may send a second message to the AMF of the SIM card 2. The second message is used to indicate that the AMF corresponding to the SIM card 1 pages the SIM card 2 by using the SIM card 1. The AMF of the SIM card 1 sends the paging message to the SIM card 1 by using a gNB corresponding to the SIM card 1. The SIM card 1 sends the paging message to the SIM card 2.

In this embodiment, when the SIM card 1 acts as a paging agent for the SIM card 2, after a network device of the SIM card 2 receives a paging message for paging the SIM card 2, if it is determined that the SIM card 2 is in an idle mode, the SIM card 1 acts as a paging agent for the SIM card 2, and there is no need to consider a current state of the SIM card 1.

In an embodiment 2, a SIM card 2 is in an inactive mode, and a state of a SIM card 1 is not limited. For example, the SIM card 1 may be in an inactive mode or a connected mode.

Referring to FIG. 7, after receiving a paging message, a UPF corresponding to the SIM card 2 sends the paging message to an SMF. The SMF sends the paging message to an AMF corresponding to the SIM card 2. After determining that the SIM card 2 is in an inactive mode, the AMF corresponding to the SIM card 2 sends a first message to an AMF corresponding to the SIM card 1. The first message is used to indicate the AMF corresponding to the SIM card 1 to page the SIM card 2 by using the SIM card 1. After receiving the first message, the AMF of the SIM card 1 may send a second message to the AMF of the SIM card 2. The second message is used to indicate that the SIM card 2 is to be paged by using the SIM card 1. The AMF of the SIM card 1 sends the paging message to the SIM card 1 by using a gNB of the SIM card 1. The SIM card 1 sends the paging message to the SIM card 2.

A manner in which the AMF corresponding to the SIM card 2 determines that the SIM card 2 is in an inactive mode may be that the AMF corresponding to the SIM card 2 sends a state query message to a gNB corresponding to the SIM card 2. The state query message is used to query for a current state of the SIM card 2. The gNB feeds back, to the AMF, a message for indicating the current state (for example, an inactive mode) of the SIM card 2.

In this embodiment, when determining that the SIM card 2 is in an inactive mode, the network device corresponding to the SIM card 2 pages the SIM card 2 by using the SIM card 1, and there may be no need to consider a current state of the SIM card 1.

A difference between the embodiment 2 and the embodiment 1 is as follows: When the SIM card 2 in the embodiment 1 is in an idle mode, the AMF corresponding to the SIM card 2 may determine that the SIM card 1 is currently in an idle mode, and there is no need to query for the current state of the SIM card 2 by using the gNB corresponding to the SIM card 2. In the embodiment 2, when the SIM card 2 is in an inactive mode, the AMF corresponding to the SIM card 2 needs to query for the current state of the SIM card 2 by using the gNB corresponding to the SIM card 2.

In an embodiment 3, when a SIM card 2 is in an idle mode, if a SIM card 1 is in an inactive mode or a connected mode, the SIM card 1 acts as a paging agent for the SIM card 2.

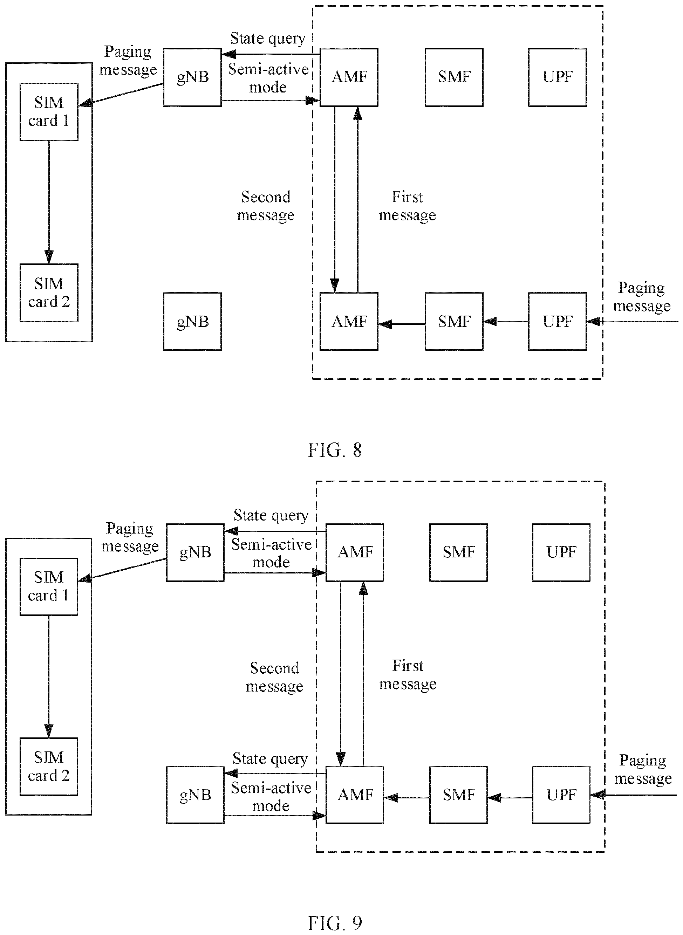

Referring to FIG. 8, after receiving a paging message, a UPF corresponding to the SIM card 2 sends the paging message to an SMF. The SMF sends the paging message to an AMF corresponding to the SIM card 2. When determining that the SIM card 2 is in an idle mode, the AMF corresponding to the SIM card 2 sends a first message to an AMF corresponding to the SIM card 1. The first message is used to indicate the AMF corresponding to the SIM card 1 to page the SIM card 2 by using the SIM card 1. After receiving the first message, the AMF of the SIM card 1 may determine a current state of the SIM card 1. If the SIM card 1 is currently in a connected mode or an inactive mode, the AMF of the SIM card 1 may send a second message to the AMF of the SIM card 2. The second message is used to indicate that the SIM card 2 is to be paged by using the SIM card 1. The AMF of the SIM card 1 sends the paging message to the SIM card 1 by using a gNB of the SIM card 1. The SIM card 1 sends the paging message to the SIM card 2.

That the AMF of the SIM card 1 determines a current state of the SIM card 1 may include that the AMF corresponding to the SIM card 1 sends a state query message to the gNB corresponding to the SIM card 1. The state query message is used to query for the current state of the SIM card 1. The gNB feeds back, to the AMF, a message for indicating the current state (such as an inactive mode or a connected mode) of the SIM card 1.

It may be understood that, assuming that the AMF of the SIM card 1 determines, after receiving the first message, that the SIM card 1 is currently in an idle mode, the AMF corresponding to the SIM card 1 may send a refusing message to the AMF corresponding to the SIM card 2. The refusing message is used to indicate that paging of the SIM card 2 by using the SIM card 1 is refused. For example, the refusing message may further carry a refusing reason, for example, carry indication information indicating that the SIM card 1 is in an idle mode.

Different from the embodiment 1 and the embodiment 2, in this embodiment, a SIM card in an inactive mode or a connected mode may act as a paging agent for a SIM card in an idle mode.

In an embodiment 4, when a SIM card 2 is in an inactive mode, if a SIM card 1 is in a connected mode, the SIM card 1 acts as a paging agent for the SIM card 2.

Referring to FIG. 9, after receiving a paging message, a UPF corresponding to the SIM card 2 sends the paging message to an SMF. The SMF sends the paging message to an AMF corresponding to the SIM card 2. When determining that the SIM card 2 is in an inactive mode (for example, querying, by using a gNB corresponding to the SIM card 2, that the SIM card 2 is currently in an inactive mode), the AMF corresponding to the SIM card 2 sends a first message to an AMF corresponding to the SIM card 1. The first message is used to indicate the ANF corresponding to the SIM card 1 to page the SIM card 2 by using the SIM card 1. After receiving the first message, the AMF corresponding to the SIM card 1 may determine a current state of the SIM card 1. If determining that the SIM card 1 is currently in a connected mode, the AMF corresponding to the SIM card 1 sends a second message to the AMF corresponding to the SIM card 2. The second message is used to indicate an acknowledgment that the SIM card 2 is to be paged by using the SIM card 1. The AMF of the SIM card 1 sends the paging message to the SIM card 1 by using a gNB of the SIM card 1. The SIM card 1 sends the paging message to the SIM card 2.

It may be understood that, assuming that the AMF of the SIM card 1 determines, after receiving the first message, that the SIM card 1 is currently in an idle mode or an inactive mode, the AMF corresponding to the SIM card 1 may send a refusing message to the AMF corresponding to the SIM card 2. The refusing message is used to indicate that paging of the SIM card 2 by using the SIM card 1 is refused. For example, the refusing message may further carry a refusing reason, for example, carry indication information indicating that the SIM card 1 is in an idle mode or an inactive mode.

Different from the foregoing other embodiments, in this embodiment, a SIM card in a connected mode may act as a paging agent for a SIM card in an idle mode.

The foregoing describes the communications method provided in the embodiments of this application, and the following describes the communications apparatus provided in the embodiments of this application.

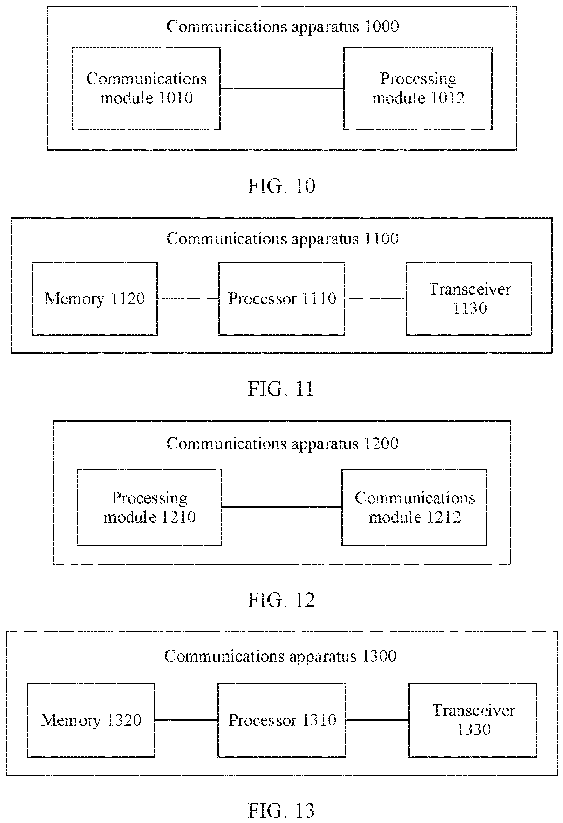

FIG. 10 is a schematic block diagram of a communications apparatus 1000 according to an embodiment of this application. The communications apparatus 1000 may be the foregoing first communications apparatus. As shown in FIG. 10, the communications apparatus 1000 includes:
a processing module 1012, configured to determine that a first user identity included in a terminal needs to be paged; and
a communications module 1010, configured to send first information to a second communications apparatus, where the first information is used to indicate the second communications apparatus to page the first user identity by using a second user identity included in the terminal; and the second communications apparatus is an apparatus providing a service to the second user identity.

It should be noted that, when the communications apparatus 1000, namely, the first communications apparatus, is the foregoing network device 1, the second communications apparatus is the network device 2.

Optionally, the first user identity is in an inactive mode or an idle mode.

Optionally, the second user identity is in a connected mode.

Optionally, the first user identity is in an inactive mode or an idle mode, and the second user identity is in an inactive mode.

Optionally, the communications module 1012 is further configured to send second information to the second communications apparatus, where the second message is used to indicate that the second communications apparatus pages the first user identity by using the second user identity.

Optionally, the communications module 1010 is further configured to receive third information sent by the second communications apparatus, where the third information is used to indicate that the second communications apparatus refuses to page the first user identity by using the second user identity; and the second user identity is in an idle mode or an inactive mode.

Optionally, the communications module 1010 is further configured to receive fourth information sent by the terminal by using the first user identity, where the fourth information is used to indicate related information of the second user identity; and the communications module 1010 is further configured to send fifth information to the terminal, where the fifth information is used to indicate that the second user identity acts as a paging agent for the first user identity.

Optionally, the communications module 1010 is further configured to receive sixth information sent by the terminal, where the sixth information is used to indicate an acknowledgment that the second user identity acts as a paging agent for the first user identity.

Optionally, the related information of the second user identity includes an international mobile equipment identity IMEI, a mobile equipment identity MEID, an international mobile subscriber identity IMSI, a temporary mobile subscriber identity TMSI, a packet temporary mobile subscriber identity P-TMSI, an integrated circuit card identifier ICCID, a mobile subscriber international ISDN number MSISDN, a mobile station roaming number MSRN, a serial number SN, or a radio network temporary identifier RNTI.

Optionally, the communications module 1010 is further configured to receive seventh information sent by the terminal by using the first user identity, where the seventh information is used to indicate that the second user identity acts as a paging agent for the first user identity.

Optionally, the first communications apparatus is an apparatus in a first communications system, and the second communications apparatus is an apparatus in a second communications system. The first communications system is an LTE system, an EPC system, or a 5G system, and the second communications system is an LTE system, an EPC system, or a 5G system.

Optionally, the first communications apparatus is a first access and mobility management function AMF, a first session management function SMF, a first radio access network RAN, or a first user plane function UPF; and the second communications apparatus is a second AMF, a second SMF, a second RAN, or a second UPF.

It should be understood that the processing module 1012 in this embodiment of this application may be implemented by a processor or a processor-related circuit component. Optionally, the communications module 1010 may include a receiving module and a sending module. For example, the communications module 1010 may be implemented by a transceiver or a transceiver-related circuit component.

It should be noted that the communications apparatus 1000 in the foregoing embodiment may be a network device, or may be a chip applied to a network device or another combined device, component, or the like that can implement the foregoing function. When the apparatus is the network device, the transceiver unit may be a transceiver, where the transceiver may include an antenna, a radio frequency circuit, and the like; the processing unit may be a processor, for example, a central processing unit (central processing unit, CPU). When the apparatus is a component with the function of the foregoing network device, the transceiver unit may be a radio frequency unit, and the processing unit may be a processor. When the apparatus is a chip system, the transceiver unit may be an input/output interface of the chip system, and the processing unit may be a processor of the chip system.

As shown in FIG. 11, an embodiment of this application further provides a communications apparatus 1100. The communications apparatus 1100 may be the foregoing network device 2. The communications apparatus 1100 includes a processor 1110, a memory 1120, and a transceiver 1130. The memory 1120 stores instructions or a program. The processor 1110 is configured to execute the instructions or the program stored in the memory 1120. When the instruction or the program stored in the memory 1120 is executed, the processor 1110 is configured to perform the operation performed by the processing module 1012 in the foregoing embodiment, and the transceiver 1130 is configured to perform the operation performed by the communications module 1010 in the foregoing embodiment.

It should be understood that the communications apparatus 1000 or the communications apparatus 1100 in the embodiment of this application may correspond to the network device 2 in the communications method shown in FIG. 5 in the embodiment of this application, and operations and/or functions of the various modules in the communications apparatus 1000 or the communications apparatus 1100 are respectively to implement the corresponding processes of the various methods of the network device 2 in FIG. 5. For brevity, details are not described herein.

FIG. 12 is a schematic block diagram of a communications apparatus 1200 according to an embodiment of this application. The communications apparatus 1200 may be the foregoing terminal. The communications apparatus 1200 includes:
a processing module 1210, configured to determine that a second user identity acts as a paging agent for a first user identity; and
a communications module 1212, configured to receive first information by using the second user identity, where the first information is used to page the first user identity.

Optionally, the first user identity is in an inactive mode or an idle mode.

Optionally, the second user identity is in a connected mode.

Optionally, the first user identity is in an inactive mode or an idle mode, and the second user identity is in an inactive mode.

Optionally, the communications module 1212 is further configured to: send second information by using the first user identity, where the second information is used to indicate related information of the second user identity; and receive third information, where the third information is used to indicate that the second user identity acts as a paging agent for the first user identity.

Optionally, the communications module 1212 is further configured to send fourth information, where the fourth information is used to indicate an acknowledgment that the second user identity acts as a paging agent for the first user identity.

Optionally, the related information of the second user identity includes an international mobile equipment identity IMEI, a mobile equipment identity MEID, an international mobile subscriber identity IMSI, a temporary mobile subscriber identity TMSI, a packet temporary mobile subscriber identity P-TMSI, an integrated circuit card identifier ICCID, a mobile subscriber international ISDN number MSISDN, a mobile station roaming number MSRN, a serial number SN, or a radio network temporary identifier RNTI.

Optionally, the communications module 1212 is further configured to send fifth information by using the first user identity, where the fifth information is used to indicate that the second user identity acts as a paging agent for the first user identity.

It should be understood that the processing module 1210 in this embodiment of this application may be implemented by a processor or a processor-related circuit component. Optionally, the communications module 1212 may include a receiving module and a sending module. For example, the communications module 1212 may be implemented by a transceiver or a transceiver-related circuit component.

It should be noted that the communications apparatus 1200 in the foregoing embodiments may be a terminal device, or may be a chip used in a terminal device, or another combined part, component, or the like that can implement a function of the foregoing terminal device. When the apparatus is the terminal device, the transceiver unit may be a transceiver, where the transceiver may include an antenna, a radio frequency circuit, and the like; and the processing unit may be a processor, for example, a central processing unit (central processing unit, CPU). When the apparatus is a component having the function of the terminal device, the transceiver unit may be a radio frequency unit, and the processing unit may be a processor. When the apparatus is the chip system, the transceiver unit may be an input/output interface of the chip system, and the processing unit may be a processor of the chip system.

As shown in FIG. 13, an embodiment of this application further provides a communications apparatus 1300. The communications apparatus 1300 may be the foregoing terminal. The communications apparatus 1300 includes a processor 1310, a memory 1320, and a transceiver 1330. The memory 1320 stores instructions or a program. The processor 1310 is configured to execute the instructions or the program stored in the memory 1320. When the instructions or the program stored in the memory 1320 is executed, the processor 1310 may perform the operations performed by the processing module 1210 in the foregoing embodiment, and the transceiver 1330 is configured to perform the operations performed by the communications module 1212 in the foregoing embodiment.

It should be understood that the communications apparatus 1200 or the communications apparatus 1300 in the embodiment of this application may correspond to the terminal in the communications method shown in FIG. 5 in the embodiment of this application, and operations and/or functions of the various modules in the communications apparatus 1200 or the communications apparatus 1300 are respectively to implement the corresponding processes of the various methods of the terminal in FIG. 5. For brevity, details are not described herein.

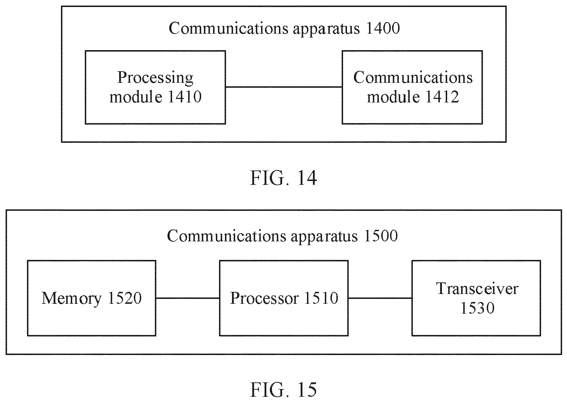

FIG. 14 is a schematic block diagram of a communications apparatus 1400 according to an embodiment of this application. The communications apparatus 1400 may be the foregoing second communications apparatus. The communications apparatus 1400 includes:
a communications module 1412, configured to receive first information sent by a first communications apparatus, where the first information is used to indicate the second communications apparatus to page a first user identity by using a second user identity included in a terminal; and the second communications apparatus is an apparatus providing a service to the second user identity, and the first communications apparatus is an apparatus providing a service to the first user identity; and
a processing module 1410, configured to control the communications module 1412 to page the first user identity by using the second user identity.

Optionally, the first user identity is in an inactive mode or an idle mode.

Optionally, the second user identity is in a connected mode.

Optionally, the first user identity is in an inactive mode or an idle mode, and the second user identity is in an inactive mode.

Optionally, the communications module 1412 is further configured to send second information to the first communications apparatus, where the second message is used to indicate that the second communications apparatus pages the first user identity by using the second user identity.

Optionally, if the second user identity is in an idle mode or an inactive mode, the communications module 1412 is further configured to send third information to the first communications apparatus, where the third information is used to indicate that the second communications apparatus refuses to page the first user identity by using the second user identity.

It should be understood that the processing module 1410 in this embodiment of this application may be implemented by a processor or a processor-related circuit component. Optionally, the communications module 1412 may include a receiving module and a sending module. For example, the communications module 1412 may be implemented by a transceiver or a transceiver-related circuit component.

It should be noted that the communications apparatus 1400 in the foregoing embodiments may be a network device, or may be a chip used in a network device, or another combined part, component, or the like that can implement a function of the foregoing network device. When the apparatus is the network device, the transceiver unit may be a transceiver, where the transceiver may include an antenna, a radio frequency circuit, and the like; and the processing unit may be a processor, for example, a central processing unit (central processing unit, CPU). When the apparatus is a component with the function of the foregoing network device, the transceiver unit may be a radio frequency unit, and the processing unit may be a processor. When the apparatus is a chip system, the transceiver unit may be an input/output interface of the chip system, and the processing unit may be a processor of the chip system.

As shown in FIG. 15, an embodiment of this application further provides a communications apparatus 1500. The communications apparatus 1500 may be the foregoing second communications apparatus. The communications apparatus 1500 includes a processor 1510, a memory 1520, and a transceiver 1530. The memory 1520 stores instructions or a program. The processor 1510 is configured to execute the instructions or the program stored in the memory 1520. When the instructions or the program stored in the memory 1520 is executed, the processor 1510 may perform the operations performed by the processing module 1410 in the foregoing embodiment, and the transceiver 1530 is configured to perform the operations performed by the communications module 1412 in the foregoing embodiment.

It should be understood that the communications apparatus 1400 or the communications apparatus 1500 in the embodiment of this application may correspond to the network device 1 in the communications method shown in FIG. 5 in the embodiment of this application, and operations and/or functions of the various modules in the communications apparatus 1400 or the communications apparatus 1500 are respectively to implement the corresponding processes of the various methods of the terminal in FIG. 5. For brevity, details are not described herein.

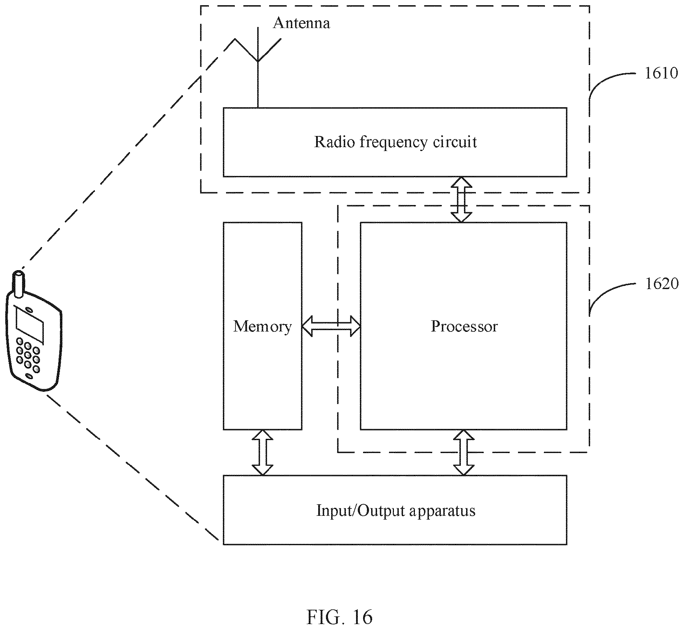

When the communications apparatus is a terminal, FIG. 16 is a schematic diagram of a simplified structure of a terminal. For ease of understanding and illustration, in FIG. 16, a mobile phone is used as an example of the terminal. As shown in FIG. 16, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to receive data input by a user, and output data to the user. It needs to be noted that some types of terminals may not have the input/output apparatus.

When data needs to be sent, the processor performs baseband processing on the to-be-sent data, and outputs a baseband signal to the radio frequency circuit. The radio frequency circuit performs radio frequency processing on the baseband signal, and sends a radio frequency signal through the antenna in a form of an electromagnetic wave. When data is sent to the terminal, the radio frequency circuit receives a radio frequency signal by using the antenna, converts the radio frequency signal into a baseband signal, and outputs the baseband signal to the processor. The processor converts the baseband signal into data, and processes the data. For ease of description, only one memory and one processor are shown in FIG. 16. In an actual terminal product, one or more processors and one or more memories may exist. The memory may also be referred to as a storage medium, a storage device, or the like. The memory may be disposed independently of the processor, or may be integrated with the processor. This is not limited in this embodiment of this application.

In this embodiment of this application, the antenna having receiving and sending functions and the radio frequency circuit may be considered as a transceiver unit of the terminal, and the processor having a processing function is considered as a processing unit of the terminal. As shown in FIG. 16, the terminal includes a transceiver unit 1610 and a processing unit 1620. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 1610 and that is configured to implement a receiving function may be considered as a receiving unit, and a component that is in the transceiver unit 1610 and that is configured to implement a sending function may be considered as a sending unit. In other words, the transceiver unit 1610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 1610 is configured to perform a sending operation and a receiving operation on a terminal side in the foregoing method embodiments, and the processing unit 1620 is configured to perform an operation other than the sending operation and the receiving operation on the terminal in the foregoing method embodiments.

For example, in an implementation, the transceiver unit 1610 is configured to perform step 501, step 505, step 506, step 507, and the like in FIG. 5. Certainly, the transceiver unit 1610 is further configured to perform another transceiver step on the terminal side in the embodiments of this application. The processing unit 1620 is configured to perform the processing steps of the terminal in FIG. 5, for example, determine which SIM card acts as a paging agent for the other SIM card.

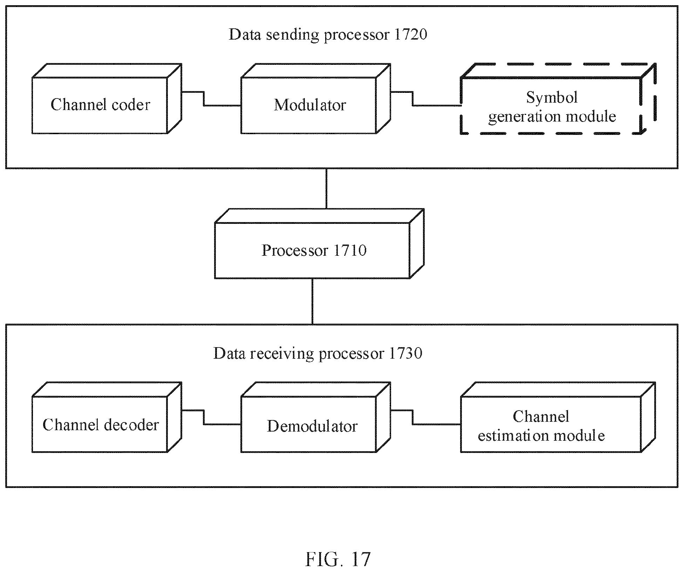

When the communications apparatus is a terminal, refer to a device shown in FIG. 17. In an example, the device can implement a function similar to a function of the processor 1110 in FIG. 11. In FIG. 17, the device includes a processor 1710, a data sending processor 1720, and a data receiving processor 1730. The processing module 1212 in the foregoing embodiment may be the processor 1710 in FIG. 17, and completes a corresponding function. The communications module 1210 in the foregoing embodiment may be the data sending processor 1720 and/or the data receiving processor 1730 in FIG. 17. Although a channel encoder and a channel decoder are shown in FIG. 17, it may be understood that these modules are not intended to constitute limitative description of this embodiment and are merely examples.

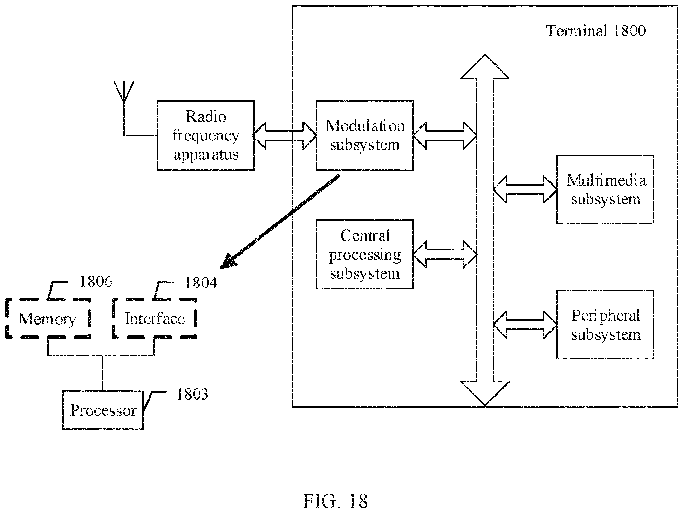

FIG. 18 shows another form of the terminal in this embodiment. The terminal 1800 includes modules such as a modulation subsystem, a central processing subsystem, and a peripheral subsystem. The terminal in this embodiment may be the modulation subsystem therein. Specifically, the modulation subsystem may include a processor 1803 and an interface 1804. The processor 1803 completes the functions of the processing module 1212, and the interface 1804 completes the functions of the communications module 1210. In another variant, the modulation subsystem includes a memory 1806, a processor 1803, and a program that is stored in the memory 1806 and that can run on the processor. When executing the program, the processor 1803 implements the method on the terminal side in the foregoing method embodiments. It should be noted that the memory 1806 may be nonvolatile or volatile. The memory 1806 may be located in the modulation subsystem, or may be located in the processing apparatus 1800, provided that the memory 1806 can be connected to the processor 1803.

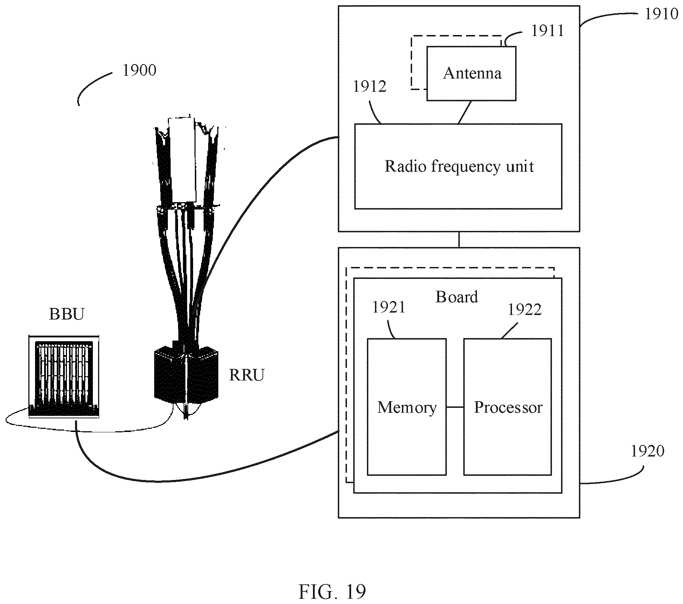

FIG. 19 is a schematic diagram of a network device according to an embodiment of this application. The network device is, for example, a base station. The network device 1900 includes one or more radio frequency units, such as a remote radio unit (remote radio unit, RRU) 1910 and one or more baseband units (baseband unit, BBU) (also referred to as digital units, digital unit, DU) 1920. The RRU 1910 may be referred to as a transceiver module, and corresponds to the communications module 1012 in FIG. 10, or corresponds to the communications module 1412 in FIG. 14. Optionally, the transceiver unit may be further referred to as a transceiver, a transceiver circuit, or the like, and may include at least one antenna 1911 and a radio frequency unit 1912. The RRU 1910 is mainly configured to: receive and send a radio frequency signal, and perform conversion between the radio frequency signal and a baseband signal. For example, the RRU 1610 is configured to send indication information to a terminal. The BBU 1910 is mainly configured to perform baseband processing, control a base station, and so on. The RRU 1910 and the BBU 1920 may be physically disposed together, or may be physically disposed separately, in other words, a distributed base station.

The BBU 1920 is a control center of the base station, or may be referred to as a processing module. The BBU 1920 may correspond to the processing module 1010 in FIG. 10 or the processing module 1410 in FIG. 14, and is mainly configured to complete baseband processing functions, such as channel coding, multiplexing, modulation, and spectrum spreading. For example, the BBU (the processing module) may be configured to control the base station to perform an operation process related to the network device in the foregoing method embodiments, for example, generate the foregoing indication information.

In an example, the BBU 1920 may include one or more boards. A plurality of boards may jointly support a radio access network (for example, an LTE network) having a single access standard, or may separately support radio access networks (for example, the LTE network, a 5G network, or another network) having different access standards. The BBU 1920 further includes a memory 1921 and a processor 1922. The memory 1921 is configured to store necessary instructions and data. The processor 1922 is configured to control the base station to perform a necessary action, for example, the processor 1922 is configured to control the base station to perform the operation process related to the network device in the foregoing method embodiments. The memory 1921 and the processor 1922 may serve one or more boards. That is, the memory and the processor may be disposed individually on each board. Alternatively, the plurality of boards may share a same memory and processor. In addition, a necessary circuit may be further disposed on each board.

It should be understood that, the processor mentioned in the embodiments of this application may be a central processing unit (Central Processing Unit, CPU), the processor may further be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general purpose processor may be a microprocessor, or the processor may be any conventional processor or the like.

It may be further understood that the memory mentioned in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification is intended to include, but is not limited to, these memories and any memory of another proper type.

It should be further understood that "first", "second", "third", "fourth", and various numbers in this specification are merely used for differentiation for ease of description, and are not construed as a limitation to the scope of this application.

It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, the functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications method, comprising:
determining, by a first communications apparatus, that a first user identity comprised in a terminal needs to be paged, wherein the first communications apparatus is an apparatus providing a service to the first user identity; and
sending, by the first communications apparatus, first information to a second communications apparatus, wherein the first information is used to indicate that the second communications apparatus pages the first user identity by using a second user identity comprised in the terminal, and the second communications apparatus is an apparatus providing a service to the second user identity.

2. The method according to claim 1, wherein the first user identity is in an inactive mode or an idle mode.

3. The method according to claim 1 or 2, wherein the second user identity is in a connected mode.

4. The method according to claim 1 or 2, wherein the first user identity is in an inactive mode or an idle mode, and the second user identity is in an inactive mode.

5. The method according to any one of claims 1 to 4, wherein the method further comprises:
receiving, by the first communications apparatus, second information sent by the second communications apparatus, wherein the second message is used to indicate that the second communications apparatus pages the first user identity by using the second user identity.

6. The method according to claim 1 or 2, wherein after the sending, by the first communications apparatus, first information to a second communications apparatus, the method further comprises:
receiving, by the first communications apparatus, third information sent by the first communications apparatus, wherein the third information is used to indicate that the second communications apparatus refuses to page the first user identity by using the second user identity, and the second user identity is in an idle mode or an inactive mode.

7. The method according to any one of claims 1 to 6, wherein the method further comprises:
receiving, by the first communications apparatus, fourth information sent by the terminal by using the first user identity, wherein the fourth information is used to indicate related information of the second user identity; and
sending, by the first communications apparatus, fifth information to the terminal, wherein the fifth information is used to indicate that the second user identity acts as a paging agent for the first user identity.

8. The method according to claim 7, wherein the method further comprises:
receiving, by the first communications apparatus, sixth information sent by the terminal, wherein the sixth information is used to indicate an acknowledgment that the second user identity acts as a paging agent for the first user identity.

9. The method according to any one of claims 1 to 6, wherein the method further comprises:
receiving, by the first communications apparatus, seventh information sent by the terminal by using the first user identity, wherein the seventh information is used to indicate that the second user identity acts as a paging agent for the first user identity.

10. A communications method, comprising:
receiving, by a second communications apparatus, first information sent by a first communications apparatus, wherein the first information is used to indicate that the second communications apparatus pages a first user identity by using a second user identity comprised in a terminal, the second communications apparatus is an apparatus providing a service to the second user identity, and the first communications apparatus is an apparatus providing a service to the first user identity; and
paging, by the second communications apparatus, the first user identity by using the second user identity.

11. The method according to claim 10, wherein the first user identity is in an inactive mode or an idle mode.

12. The method according to claim 10 or 11, wherein the second user identity is in a connected mode.

13. The method according to claim 10 or 11, wherein the first user identity is in an inactive mode or an idle mode, and the second user identity is in an inactive mode.

14. The method according to any one of claims 10 to 13, wherein the method further comprises:
sending, by the second communications apparatus, second information to the first communications apparatus, wherein the second message is used to indicate that the second communications apparatus pages the first user identity by using the second user identity.

15. The method according to claim 10 or 11, wherein the method further comprises:
if the second user identity is in an idle mode or an inactive mode, sending, by the second communications apparatus, third information to the first communications apparatus, wherein the third information is used to indicate that the second communications apparatus refuses to page the first user identity by using the second user identity.

16. A communications method, applied to a communications apparatus comprising a first user identity and a second user identity, wherein the method comprises:
determining that the second user identity acts as a paging agent for the first user identity; and
receiving first information by using the second user identity, wherein the first information is used to page the first user identity.

17. The method according to claim 16, wherein the first user identity is in an inactive mode or an idle mode.

18. The method according to claim 16 or 17, wherein the second user identity is in a connected mode.

19. The method according to claim 16 or 17, wherein the first user identity is in an inactive mode or an idle mode, and the second user identity is in an inactive mode.

20. The method according to any one of claims 16 to 19, wherein the determining that the second user identity acts as a paging agent for the first user identity comprises:
sending second information by using the first user identity, wherein the second information is used to indicate related information of the second user identity; and
receiving third information, wherein the third information is used to indicate that the second user identity acts as the paging agent for the first user identity.

21. The method according to claim 20, wherein the method further comprises:
sending fourth information, wherein the fourth information is used to indicate an acknowledgment that the second user identity acts as a paging agent for the first user identity.

22. The method according to any one of claims 16 to 21, wherein the method further comprises:
sending fifth information by using the first user identity, wherein the fifth information is used to indicate that the second user identity acts as a paging agent for the first user identity.

23. A communications apparatus, comprising:
a processing unit, configured to determine a first user identity comprised in a terminal that needs to be paged, wherein the communications apparatus is an apparatus providing a service to the first user identity; and
a communications unit, configured to send first information to a second communications apparatus, wherein the first information is used to indicate that the second communications apparatus pages the first user identity by using a second user identity comprised in the terminal, and the second communications apparatus is an apparatus providing a service to the second user identity.

24. A communications apparatus, comprising:
a communications module, configured to receive first information sent by a first communications apparatus, wherein the first information is used to indicate that the communications apparatus pages a first user identity by using a second user identity comprised in a terminal, the communications apparatus is an apparatus providing a service to the second user identity, and the first communications apparatus is an apparatus providing a service to the first user identity; and
a processing module, configured to control the communications module to page the first user identity by using the second user identity.

25. A communications apparatus, wherein the communications apparatus comprises a first user identity and a second user identity, and further comprises:
a processing unit, configured to determine that the second user identity acts as a paging agent for the first user identity; and
a communications unit, configured to receive first information by using the second user identity, wherein the first information is used to page the first user identity.

26. A communications apparatus, comprising:
one or more processors;
one or more memories; and
a communications interface, configured to communicate with another apparatus, wherein
the one or more memories store a computer program, and when the computer program is executed by the one or more processors, the communications apparatus is enabled to implement the method according to any one of claims 1 to 9, claims 10 to 15, or claims 16 to 22.

27. A computer-readable storage medium, wherein the computer-readable storage medium stores a computer program, and when the computer program runs on an electronic device, the electronic device is enabled to implement the method according to any one of claims 1 to 9, claims 10 to 15, or claims 16 to 22.

28. A computer program, comprising instructions, wherein when the instructions are run on a computer, the computer is enabled to implement the method according to any one of claims 1 to 9, claims 10 to 15, or claims 16 to 22.

29. A chip, wherein the chip is configured to read a computer program stored in a memory, to implement the method according to any one of claims 1 to 9, claims 10 to 15, or claims 16 to 22.
